# EUROPEAN PATENT APPLICATION

(11) **EP 4 841 412 A1**
(43) Date of publication of application: **18.11.2026**
(21) Application number: 25747435.3
(22) Date of filing: 06.01.2025
(51) Int. Cl.: G06F 3/0484, G06F 3/0481, G06F 3/0482

(54) **CONTROL ADJUSTMENT METHOD AND APPARATUS, DEVICE, MEDIUM AND PROGRAM PRODUCT**

(30) Priority: 02.02.2024 CN 202410160435
(71) Applicant: Tencent Technology (Shenzhen) Company Limited, Shenzhen, Guangdong 518057 (CN)
(72) Inventor: XU, Shayuan, Shenzhen, Guangdong 518057 (CN)
(74) Representative: Reddie & Grose LLP
(86) International application number: PCT/CN2025/070861
(87) International publication number: WO 2025/161859

(57) **Abstract**

A control adjustment method and apparatus, a device, a medium, and a program product, relating to the technical field of computers. The method comprises the following steps: displaying an element region and an element level adjustment region (610); receiving a sliding operation in respect of a first adjustment control (620); and displaying the adjusted first adjustment control on the basis of a first sliding component and a second sliding component and, on the basis of the level of the adjusted first adjustment control in the element level adjustment region, displaying in the element region a first virtual element of which the level has been adjusted (630).

## Description

This application claims priority to Chinese Patent Application No. 202410160435.6, filed with the China National Intellectual Property Administration, entitled "METHOD AND APPARATUS FOR ADJUSTING A CONTROL, DEVICE, MEDIUM, AND PROGRAM PRODUCT" and filed on February 2, 2024.

### FIELD OF THE TECHNOLOGY

Embodiments of the present disclosure relate to the field of computer technologies, and in particular, to a method for adjusting a control and apparatus, a device, a medium, and a program product.

### BACKGROUND OF THE DISCLOSURE

Some application programs providing an interface editing capability allow users to customize styles and functions of various controls on a display region and adjust positions of the controls via an adjustment region to meet creation requirements of the users.

Arranging controls in different layers can enrich content levels of the display region. In a related art, when a user drags the controls up and down in the adjustment region and adjusts a sequence of the controls in the adjustment region, a corresponding display effect is displayed in the display region. For example, the display region includes a first control (corresponding to text) and a second control (corresponding to a picture). When the first control is placed in a layer above the second control via the adjustment region, the text is displayed above the picture in the display region.

However, when there are a large number of controls, the user needs to frequently expand or collapse the control list in order to drag a selected control to a selected layer, or the user needs to drag a control for a long distance in order to reach a selected layer. This process results in the user spending a large amount of time adjusting the controls to corresponding layers, resulting in inefficient human-computer interaction.

### SUMMARY

Embodiments of the present disclosure provide a method and an apparatus for adjusting a position of a control of a virtual object, a device, a medium, and a program product, to improve efficiency of control adjustment. Technical solutions are as follows:

In an aspect, a method for adjusting a position of a control of a virtual object is provided according to embodiments of the present disclosure. The method is executable by a computer device. The method includes: displaying an object region and an adjustment region, where the object region comprises at least two virtual objects, and the adjustment region comprises a hierarchical structure of at least two adjustment controls, the at least two adjustment controls when being displayed are arranged along the first direction in the hierarchical structure, the at least two adjustment controls comprises a first adjustment control, and the first adjustment control is configured to adjust a display parameter of a first virtual object among the at least two virtual objects; detecting a first vector component and a second vector component of a slide operation performed on the first adjustment control, where the first vector component is along the first direction, the second vector component is along the second direction, and the first direction is different from the second direction; adjusting, in the adjustment region, a position of the first adjustment control in the hierarchical structure according to the first vector component and the second vector component; and adjusting the first virtual object in the object region according to the adjusted position of the first adjustment control in the hierarchical structure displayed in the adjustment region.

In another aspect, a control adjustment apparatus is provided according to embodiments of the present disclosure. The apparatus includes: a region display module, configured for displaying an object region and an adjustment region, where the object region comprises at least two virtual objects, and the adjustment region comprises a hierarchical structure of at least two adjustment controls, the at least two adjustment controls when being displayed are arranged along the first direction in the hierarchical structure, the at least two adjustment controls comprise a first adjustment control, and the first adjustment control is configured to adjust a display parameter of a first virtual object among the at least two virtual objects; a receiving module, configured for detecting a first vector component and a second vector component of a slide operation performed on the first adjustment control, where the first vector component is along the first direction, the second vector component is along the second direction, and the first direction is different from the second direction; and an display adjusting module, configured for: adjusting, in the adjustment region, a position of the first adjustment control in the hierarchical structure according to the first vector component and the second vector component; and adjusting the first virtual object in the object region according to the adjusted position of the first adjustment control in the hierarchical structure displayed in the adjustment region.

In another aspect, a computer device is provided according to embodiments of the present disclosure. The computer device includes a processor and a memory. The memory stores least one instruction, at least one program, a code set, or an instruction set. The at least one instruction, the at least one program, the code set, or the instruction set when being loaded and executed by the processor implements the foregoing method.

In another aspect, a computer-readable storage medium is provided according to embodiments of the present disclosure. The computer-readable storage medium stores at least one instruction, at least one program, a code set, or an instruction set. The at least one instruction, the at least one program, the code set, or the instruction set when being loaded and executed by a processor implements the foregoing method.

In another aspect, a computer program product or a computer program is provided according to embodiments of the present disclosure. The computer program product or the computer program comprises computer instructions, and the computer instructions are stored in a computer-readable storage medium. A processor of a computer device reads the computer instructions from the computer-readable storage medium, and the processor executes the computer instructions, so that the computer device performs the foregoing method.

The technical solutions provided in the embodiments of the present disclosure produce at least the following beneficial effects.

The object region and the corresponding adjustment region are displayed. When the at least two adjustment controls arranged in the first direction in the adjustment region are rearranged, display priority of their corresponding virtual objects are also adjusted in the object region, that is, layers of the virtual objects in the object region are adjusted. The slide operation performed on the adjustment control is detected, and the position of the adjustment control is adjusted based on the slide operation. The slide operation (e.g., a swipe operation) has vector components along the first direction and the second direction, so that the adjustment control can be adjusted accurately with reference to at least two directions. Herein the vector component refers to a vector characterizing movement of an operator, such as a finger, a stylus, etc., which performs the slide operation, along a certain direction. When there are a lot of adjustment controls in the adjustment region, it is unnecessary to collapse or expand the controls frequently in the control list during the adjustment of display priority the virtual objections. Since rearrangement of the adjustment control is implemented with reference to the vector components of the same slide operation in different directions, the rearrangement is convenient and thus human-computer interaction is more efficient.

### BRIEF DESCRIPTION OF THE DRAWINGS

FIG. 1 is a schematic diagram of adjusting a level of a virtual control according to an embodiment of the present disclosure.
FIG. 2 is a schematic flowchart of a method for adjusting a position of a control of a virtual object according to an embodiment of the present disclosure.
FIG. 3 is a schematic diagram of a process of adjusting a level of an adjustment control according to vector components in different directions according to an embodiment of the present disclosure.
FIG. 4 is a structural block diagram of an electronic device according to an embodiment of the present disclosure.
FIG. 5 is a structural block diagram of a computer system according to an embodiment of the present disclosure.
FIG. 6 is a flowchart of a method for adjusting a position of a control of a virtual object according to another embodiment of the present disclosure.
FIG. 7 is a schematic diagram of an object region and an adjustment region according to an embodiment of the present disclosure.
FIG. 8 is a schematic diagram of two manners of determining a vector component according to an embodiment of the present disclosure.
FIG. 9 is a schematic diagram of displaying an underline according to a second vector component according to an embodiment of the present disclosure.
FIG. 10 is a schematic diagram of a process of displaying an adjusted first adjustment control according to a first vector component and a second vector component according to an embodiment of the present disclosure.
FIG. 11 is a schematic diagram of a manner of performing level adjustment on an adjustment control according to a first vector component according to an embodiment of the present disclosure.
FIG. 12 is a schematic diagram of expanding an object-group control to show single-object controls according to an embodiment of the present disclosure.
FIG. 13 is a schematic diagram of collapsing an object-group control to hide single-object controls according to an embodiment of the present disclosure.
FIG. 14 is a schematic diagram of a process of a terminal determining a type of control adjustment according to an embodiment of the present disclosure.
FIG. 15 is a flowchart of a method for adjusting a position of a control of a virtual object according to another embodiment of the present disclosure.
FIG. 16 is a flowchart of a method for performing level adjustment on an object-group control according to an embodiment of the present disclosure.
FIG. 17 is a schematic diagram of a result of inserting a first object-group control into a second object-group control according to an embodiment of the present disclosure.
FIG. 18 is a flowchart of a method for replacing an adjustment control through a sliding operation according to an embodiment of the present disclosure.
FIG. 19 is a schematic diagram of a process of replacing an adjustment control through a sliding operation according to an embodiment of the present disclosure.
FIG. 20 is a flowchart of a method for collapsing an adjustment control through a sliding operation according to an embodiment of the present disclosure.
FIG. 21 is a schematic diagram of a process of collapsing an adjustment control through a sliding operation according to an embodiment of the present disclosure.
FIG. 22 is a schematic diagram of a display effect of an adjustment control in different states according to an embodiment of the present disclosure.
FIG. 23 is a structural block diagram of an apparatus for adjusting a position of a control of a virtual object according to an embodiment of the present disclosure.
FIG. 24 is a structural block diagram of an apparatus for adjusting a position of a control of a virtual object according to another embodiment of the present disclosure.
FIG. 25 is a structural block diagram of a computer device according to an embodiment of the present disclosure.

### DESCRIPTION OF EMBODIMENTS

The terms involved in embodiments of the present disclosure are briefly described.

User-generated content (UGC): content created by a user. The user presents created content of the user or provides the content to other users by using an Internet platform.

In a game application program or an application program according to a virtual scene, a user may participate in design of game content such as a game level, a game map, and gameplay by using some game mechanisms and corresponding UGC editing functions provided by the application program, to increase interest in a game process.

In some application programs that provide an interface editing capability or a UGC editing capability, a user can edit display content in a game by using the interface editing capability or the UGC editing capability provided by a system, for example, make a map, layout elements on the map, change positions of elements, or superimpose and combine elements.

In a related art, a UGC editing interface includes an object region and an adjustment region. The object region includes a virtual object, the adjustment region displays a hierarchical structure of adjustment controls, and a correspondence is configured between the adjustment controls in the adjustment region and the virtual objects in the object region. Through level adjustment on the adjustment control in the adjustment region, the user can perform layer adjustment on the corresponding virtual object in the object region, that is, adjust a sequence of layers on which the virtual objects are located in the object region. For example, a first adjustment control in the adjustment region corresponds to a first virtual object (text content) in the object region, and a second adjustment control in the adjustment region corresponds to a second virtual object (picture content) in the object region. The user places the first adjustment control at a level above the second adjustment control by using the adjustment region and thus displays the text content on the top of or on a layer above the picture content in the object region. That is, from a top-down perspective, the first virtual object is displayed first, and the second virtual object is displayed under the first virtual object.

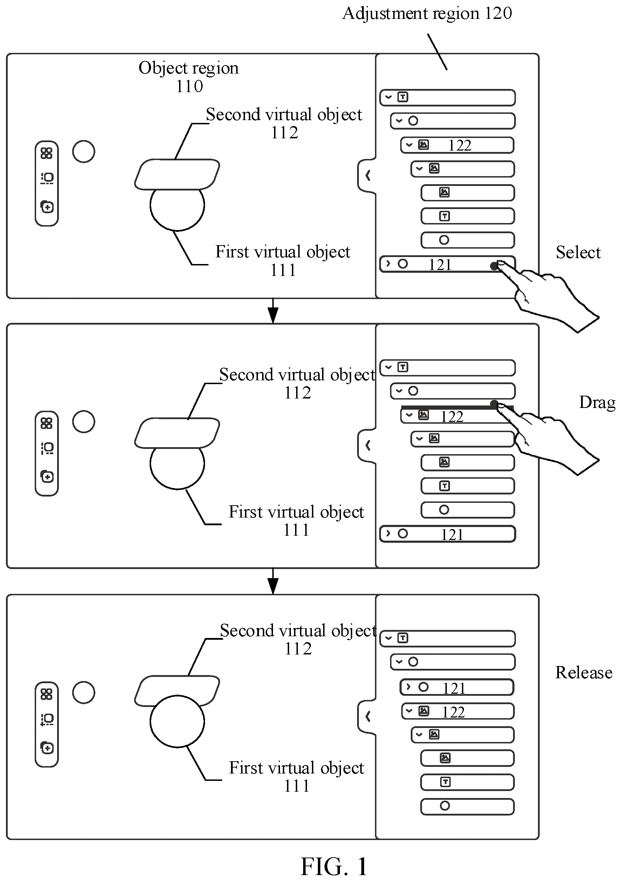

Reference is made to FIG. 1, which is a schematic diagram of adjusting a level of a virtual control.

The UGC editing interface includes an object region 110 and an adjustment region 120. The object region 110 includes a first virtual object 111 and a second virtual object 112, which are controlled by a first control 121 and a second control 122 in the adjustment region 120, respectively. The first virtual object 111 is located on a layer below the second virtual object 112.

The user selects the first control 121 and drags the first control 121 to a layer above the second control 122, and in this case, a selected position corresponding to (e.g., near) the second control 122 is displayed. The selected position indicates a level at which the first control 121 is located after the user releases the first control 121.

After the user releases the first control 121, the first control 121 is located on a level above the second control 122, and the first virtual object 111 is also located on a layer above the second virtual object 112.

In order to intuitively represent correspondence between levels in the hierarchical structure and object layers, controls are arranged in the adjustment region along a preset direction. When adjusting the control level, the user drags the control along the control arrangement direction. When a quantity of controls in the adjustment region is large, the user needs to drag the control to move for a long distance to adjust a level of the control, resulting in low efficiency of control adjustment.

In embodiments of the present disclosure including the embodiments of both the claims and the specification (hereinafter referred to as "all embodiments of the present disclosure"), the control list in the adjustment region may be partially folded to reduce a length of the control list. When the user drags a control to adjust a level, a folded part is traversed, so that a drag distance of the user can be reduced to some extent.

In this case, the user needs to additionally perform a folding operation when dragging the control and further needs to expand the folded control list after the control level is adjusted. This causes inconvenience to the user during control level adjustment, and the efficiency of human-computer interaction is low.

The present disclosure provides a method for adjusting a position of a control of a virtual object, so that after a control of which a level is to be adjusted is selected, accurate adjustment on a control level can be implemented using only one slide operation having vector components in different directions. A slide distance is reduced, the control list does not need to be frequently expanded or collapsed, and the efficiency of human-computer interaction during control adjustment can be improved.

The method may be applied to the following scenarios.
(1) Game application scenario: a game application program, software according to a virtual scene, an application program that can provide an interface editing capability, and the like.
   In the game application scenario, a user may design and layout virtual objects in a game level, a game map, a virtual scene (for example, a user home in a game), and the like. An object region and an adjustment region are displayed on an interface. Objects in the object region may be superimposed, and the objects correspond to adjustment controls. A slide operation is performed on the adjustment controls in the adjustment region to adjust a control level, so that a layer sequence of the virtual objects in the object region/a level sequence in a direction perpendicular to a terminal interface can be adjusted.
(2) Image processing scenario: image processing software, and a platform or a website that can provide an image processing function.
   In the image processing scenario, an image processing region and a control adjustment region are displayed on an interface. During image processing, the image may be divided into at least two superimposed layers, and each layer corresponds to an adjustment control. Control levels are adjusted by performing a slide operation on the adjustment control, to adjust a sequence of the layers in the image. For example, the image includes 15 layers, controls corresponding to the 15 layers are arranged in the control adjustment region from top to bottom, and each control has a respective component for visualizing selection. An adjustment control corresponding to the 1^{st} layer is selected and slid, and a visual effect of the components of different controls is changed according to vector components of the slide operation in different directions, to determine a selected position of the adjustment control corresponding to the 1^{st} layer and implement level adjustment.
(3) Drawing scenario: drawing software, and a platform or a website that can provide a drawing function.

In the drawing scenario, an image drawing region and a control adjustment region are displayed on an interface. When drawing an image, a user may create at least two layers or canvases. Each layer or canvas corresponds to an adjustment control. A slide operation is performed on the adjustment control to adjust a control level, so that a sequence of the layers or the canvases in the drawn image can be adjusted.

It is taken as an example that the method for adjusting a position of a control of a virtual object is applied to a game scenario. The user may participate in design of game content such as a game level, a game map, and gameplay by using UGC editing capabilities provided in an application program (a game application program/an application program according to a virtual scene).

The terminal displays a UGC editing interface, and the user may edit a virtual object by operating a control on the UGC editing interface, or the user may directly edit the virtual object, for example, modify a form, an appearance, or a quantity of the virtual objects; control the virtual object to move; and create a virtual object by using a function provided by the application program.

In all embodiments of the present disclosure, an editable virtual object may comprise a first virtual object. The user may modify a form of the first virtual object by performing an editing operation such as moving, rotating, or scaling on the editable virtual object. When the editable virtual object further includes a second virtual object, the user may further combine the first virtual object and the second virtual object into a virtual module.

Alternatively or additionally, the user may modify orientations of virtual objects, to construct a virtual module having a symmetrical structure, or the like.

Alternatively or additionally, the user may modify layers on which virtual objects are located, so that the virtual objects are displayed in a superimposing manner. For example, a layer of the first virtual object is placed above a layer of the second virtual object, so that the first virtual object is presented on the top of the second virtual object, and the second virtual object is presented beneath the first virtual object.

An adjustment control corresponding to the editable virtual object exists in the UGC editing interface. The foregoing plurality of effects of editing the editable virtual objects can also be implemented by performing a corresponding operation on the adjustment control.

For example, the layer of the virtual object is adjusted by adjusting a control level of an adjustment control.

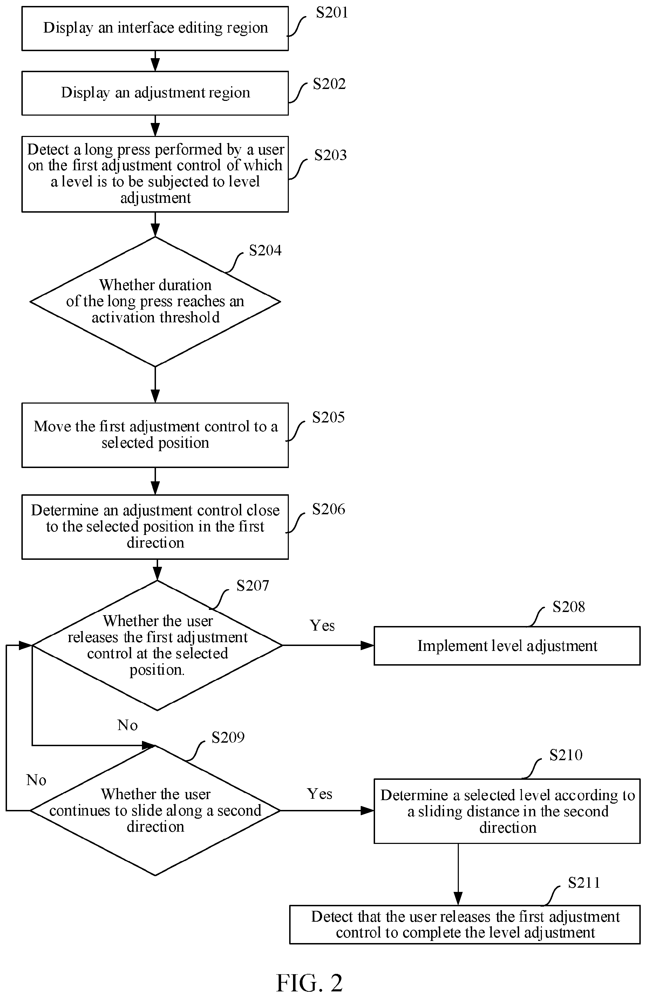

Reference is further made to FIG. 2, which is a flowchart of a method for adjusting a position of a control of a virtual object. Hereinafter it is taken as an example that the method is applied to a casual party game. The method includes the following operations.

S201: Display an interface editing region.

In a party casual game, a user may design a home by using a UGC editing function provided by a game application program, for example, plan purposes, architectural styles, and floor areas of different zones within the home, and freely arrange furniture, potted plants, pets, and the like.

When the user logs in to a main control account and controls a main control virtual role to enter the home, a terminal screen automatically displays a UGC editing interface corresponding to the home. That is, when the main control virtual role enters the home, the user can edit an editable virtual object existing in the garden.

An object region and an interface editing region are displayed on the UGC editing interface. The interface editing region may be used to display the adjustment region.

The object region may be a home region. The object region includes at least two virtual objects, the adjustment region includes at least two adjustment controls arranged in the first direction, and a correspondence is configured between the virtual objects in the object region and adjustment controls in the adjustment region.

In all embodiments of the present disclosure, the user may directly edit the virtual objects in the object region or may edit the virtual objects by performing an adjustment operation on the corresponding adjustment controls.

In all embodiments of the present disclosure, types of operations of editing virtual objects may include, but are not limited to:
(1) a mirroring operation: a virtual object is displayed in a mirroring manner in a symmetry direction or along a symmetry center;
(2) a copying operation: copying a virtual object; and
(3) a layer adjustment operation: each virtual object is located in a layer of virtual objects, the layer indicates a priority of displaying the virtual object in a display region, and when positions of at least two virtual objects overlap, a virtual object on an upper layer is displayed as preference.

For example, the object region includes a first virtual object and a second virtual object. Positions of the first virtual object and the second virtual object may overlap in the object region. A layer in which the first virtual object is located is above a layer in which the second virtual object is located. In this case, when viewed in a direction perpendicular to the screen, the first virtual object is displayed on the top of and the second virtual object. In a region in which the first virtual object and the second virtual object overlap, the first virtual object occludes the second virtual object.

The layer adjustment operation performed on the virtual object may be implemented by adjusting a level of its adjustment control in the adjustment region. A correspondence is configured between layers of the virtual objects in the display region and levels (also called control levels) of the adjustment controls in the adjustment region.

For example, the first virtual object and the second virtual object are in the same layer and are displayed in parallel in the object region, and a first adjustment control corresponding to the first virtual object and a second adjustment control corresponding to the second virtual object in the adjustment region are at the same control level.

If the level of the first adjustment control is adjusted to be lower than the level of the second adjustment control, the first virtual object is moved to another layer that is beneath the layer in which the second virtual object is located.

S202: Display an adjustment region.

The at least two adjustment controls include a first adjustment control, and the first adjustment control is configured for adjusting a first virtual object (e.g., adjusting display priority of the first virtual object) among at least two virtual objects.

S203: Detect a long press performed by a user on the first adjustment control of which a level is to be subjected to level adjustment.

In all embodiments of the present disclosure, a long-press operation is performed on the first adjustment control, to select the first adjustment control and perform a level adjustment process on the first adjustment control.

S204: Determine whether duration of the long press reaches an activation threshold.

That is, it is determined whether duration for which the user holds the first adjustment control reaches a condition for activating level adjustment.

For example, when the duration for which the user holds the first adjustment control reaches one second and the user does not release the first adjustment control, the condition for activating the level adjustment is met.

When the duration reaches the condition, operation S205 is performed.

S205: Move the first adjustment control to a selected position.

The adjustment controls in the adjustment region are arranged in the first direction, and the selected position is determined according to a vector component of a dragging/sliding operation performed by the user, and the vector component is along a first direction .

S206: Determine an adjustment control close to the selected position in the first direction.

Each adjustment control has a component for visualizing the selection on the adjustment control. For an adjustment control closest to the selected position, i.e., a position that the user's dragging/sliding operation currently reaches, the component corresponding to the adjustment control is displayed (e.g., with a highlight effect), and the components of other adjustment controls are not displayed.

S207: Determine whether the user releases the first adjustment control at the selected position. The selected position may be a position with reference to a coordinate axis pointing in the first direction (hereinafter abbreviated as a position along the first direction).

If the user releases the first adjustment control at the selected position, the slide operation ends, and operation S208 is performed.

If the user does not release the first adjustment control at the selected position, operation S209 is performed.

S208: Implement level adjustment.

The first adjustment control after the level adjustment is adjacent to the adjustment control having the displayed component (e.g., with a highlight effect), and they belong to the same level in the hierarchical structure.

In all embodiments of the present disclosure, the adjustment control of which the component is displayed with a highlight effect may be an object-group control, and the object-group control is usually superordinate to at least one single-object control in the hierarchical structure. For example, a level of the object-group control is higher than a level of the at least one single-object control subordinate to the object-group control. It is taken as an example that the first adjustment control is an object-group control.

For example, an object-group control A is expanded to show a single-object control B. If the object-group control A is located at a level higher than a level of the first adjustment control C, after the adjustment, the object-group control A and the first adjustment control C may be displayed as siblings in the same level is displayed, and the first adjustment control C is located directly below the object-group control A and the expanded single-object control B. That is, in the adjustment region, a display sequence from top to bottom is: the object-group control A, the single-object control B, and the first adjustment control C.

In all embodiments of the present disclosure, the single-object control B included in the object-group control A may be hidden through collapsing the object-group control A. A display sequence from top to bottom after the level adjustment becomes: the object-group control A and the first adjustment control C.

S209: Determine whether the user continues to slide along a second direction.

The second direction is different from the first direction (for example, the second direction and the first direction are perpendicular to each other), and the selected position is updated according to a vector component of the dragging/sliding operation in the second direction.

Each adjustment control has a component. When an adjustment control is closest to the selected position, the component corresponding to the adjustment control is displayed with a highlight effect.

For example, the component is a line separating adjacent adjustment controls displayed in the adjustment region (e.g., an underline of the corresponding adjustment control, hereinafter this line is called the underline for brevity). Adjustment controls in the same level of the hierarchical structure have the underlines of the same length, and adjustment controls in different levels of the hierarchical structure have the underlines of different lengths.

In this example, the length of the highlighted underline of the closest adjustment control may be adjusted according to the current vector component in the second direction, and the selected position is updated according to the length of this underline.

For example, in operation S206, it is determined that a single-object control D is closest to the currently selected position, the single-object control D is subordinate to an object-group control E, a length of an underline of the single-object control D is two unit distances, and a length of an underline of the object-group control E is three unit distances.

In this example, when the vector component in the second direction is equal to one unit distance, the underline is prolonged along the second direction, and the selected position is updated to a position close to the object-group control E, that is, the closest adjustment control is updated to be the object-group control E.

If the user continues to slide in the second direction, operation S210 is performed.

S210: Determine a selected level according to a sliding distance in the second direction.

For example, the slide distance in the second direction causes the length of the highlighted underline has the same length (that is, three unit distances) as the underline of the object-group control E, the selected level is determined to be the level in which the object-group control E is located.

S211: Detect that the user releases the first adjustment control to complete the level adjustment.

The first adjustment control after the level adjustment is adjacent to the above "closest" adjustment control having the component displayed with a highlight effect, and they belong to the same level.

For example, the adjustment control having the component displayed with a highlight effect is the object-group control E, and the first adjustment control after the level adjustment and the object-group control E are adjacent and belong to the same level.

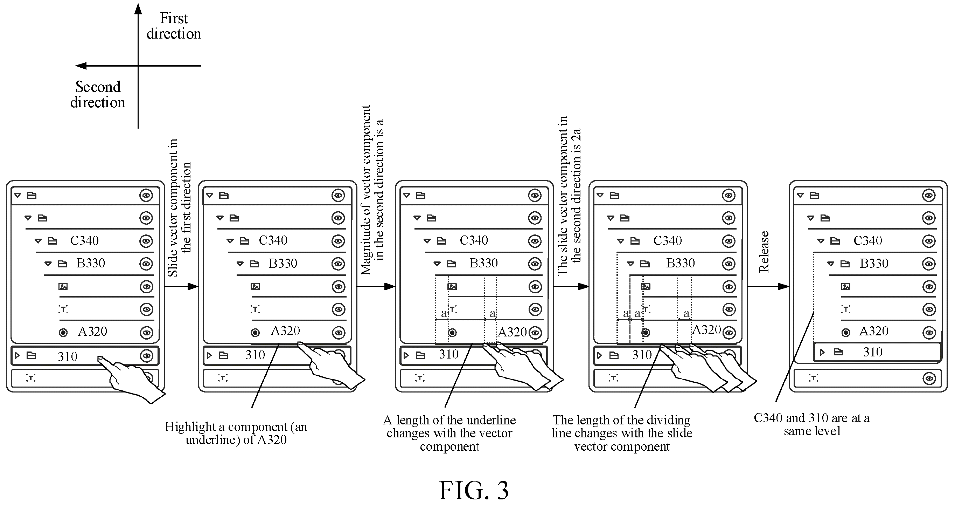

Reference is further made to FIG. 3, which is a schematic diagram of a process of adjusting a component level according to vector components in different directions corresponding to FIG. 2.

The first adjustment control 310 is selected, and a slide operation is then performed. An adjustment control A320 closest to the selected position is determined using the vector component of the slide operation in the first direction. The adjustment control A320 is a single-object control, the adjustment control A320 is subordinate to an object-group control B330, and the object-group control B330 is subordinate to an object-group control C340.

When the slide operation reaches the selected position in the first direction, the component of the adjustment control A320 is displayed with a highlight effect. It is taken as an example that the component is an underline. The underlines of the adjustment control A320, the object-group control B330, and the object-group control C340 have different lengths, such as d, d+a, and d+2a (in unit distance), where a and d are positive numbers.

In all embodiments of the present disclosure, the slide operation may also have the vector component in the second direction, and the length of the displayed underline of highlighted underline the changes with the vector component in the second direction.

When the vector component is equal to one unit distance a, the length of the underline is increased by one unit distance. It is taken as an example that the second direction is a horizontally leftward direction. As shown in FIG. 3, because the object-group control and the single-object control are arranged with their right ends aligned, the length of the underline is increased leftwards when the vector component in the second direction points leftward. Similarly, when the vector component in the second direction points leftward, the length of the underline is decreased rightwards.

When the vector component is equal to one unit distance, i.e., a, the length of the highlighted underline is changed to d+a, which is the same as the length of the underline of the object-group control B330. If the user releases the first adjustment control 310 at this time, the first adjustment control 310 would be moved to be adjacent to and at the same level as the object-group control B330.

When the vector component is equal to two unit distances, i.e., 2a, the length of the highlighted underline is changed to d+2a, which is the same as the length of the underline of the object-group control C340. If the user releases the first adjustment control 310 at this time, the first adjustment control 310 would be moved to be adjacent to and in the same level as the object-group control C340.

As shown in FIG. 3, if the user releases the first adjustment control 310 when the vector component is equal to two unit distances, the first adjustment control 310 and the object-group control B330 would be adjacent and belong to the same level in the hierarchical structure.

When the object-group control B330 and the object-group control C340 are expanded in the adjustment region, the first adjustment control 310 is adjacent to the single-object control (e.g., the adjustment control A320 in FIG. 3) located at the lowest level subordinate to the object-group control B330 and the object-group control C340 in the hierarchical structure.

Herein control adjustment efficiency can be improved when the number of adjustment controls in an adjustment region is large. In this way, the user does not need to frequently collapse or expand the control list when adjusting the control. The control can be accurately adjusted only with reference to vector components of the same slide operation in different directions, thereby improving the efficiency of human-computer interaction.

A terminal in the present disclosure may be a desktop computer, a laptop computer, a mobile phone, a tablet computer, an e-book reader, a moving picture experts group audio layer III (MP3) player, a moving picture experts group audio layer IV (MP4) player, or the like. An application program supporting a virtual scene, for example, an application program supporting a three-dimensional virtual scene, is installed and run on the terminal. The application program may be any one of a virtual reality application program, a three-dimensional map program, a simulation game (SLG), a third-person shooter (TPS) game, a first-person shooter (FPS) game, a multiplayer online battle arena (MOBA) game, a party casual game, a tower defense game, or a social game. In all embodiments of the present disclosure, the application program may be a standalone application program, for example, a standalone three-dimensional game program, or may be a network-connected application program.

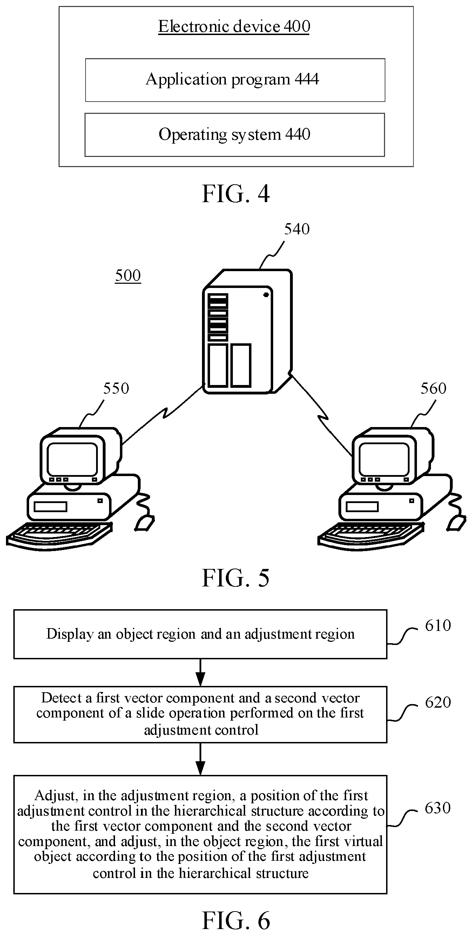

FIG. 4 is a structural block diagram of an electronic device according to an embodiment of the present disclosure. An electronic device 400 includes an operating system 440 and an application program 444.

The operating system 440 is basic software provided for the application program 444 to perform secure access to computer hardware.

The application program 444 is an application program supporting a virtual scene. In all embodiments of the present disclosure, the application 444 is an application supporting a three-dimensional virtual scene. The application program 444 may be any one of a virtual reality application program, a three-dimensional map program, an SLG game, a TPS game, an FPS game, a MOBA game, a party casual game, a tower defense game, or a social game. The application program 444 may be a standalone application program, for example, a standalone three-dimensional game program, or may be a network-connected application program.

FIG. 5 is a structural block diagram of a computer system according to an embodiment of the present disclosure. A computer system 500 includes: a first device 550, a server 540, and a second device 560.

An application program supporting a virtual scene is installed and runs on the first device 550. The application program may be any one of a virtual reality application program, a three-dimensional map program, a TPS game, an FPS game, a MOBA game, an SLG game, a party casual game, or a tower defense game. The first device 550 is a device used by a first user. The first user uses the first device 550 to control a first virtual object in the virtual scene to perform an action. The action includes but is not limited to at least one of body posture adjustment, walking, running, jumping, or attacking. For example, the first virtual object is a first virtual character, such as a simulated character role or an animation character role.

The first device 550 is connected to the server 540 through a wireless network or a wired network.

The server 540 includes at least one of: a single server, a plurality of servers, a cloud computing platform, or a virtualization center. The server 540 is configured to provide a backend service for an application program supporting a virtual scene. In all embodiments of the present disclosure, the server 540 may be responsible for primary computing work, and the first device 550 and the second device 560 are responsible for secondary computing work. Alternatively, the server 540 may be responsible for secondary computing work, and the first device 550 and the second device 560 are responsible for primary computing work. Alternatively, the server 540, the first device 550, and the second device 560 perform collaborative computing by using a distributed computing architecture among each other.

The server 540 controls a second virtual object in the virtual scene to perform an action. The action includes but is not limited to at least one of: body posture adjustment, walking, running, jumping, or attacking. For example, the second virtual object may be a second virtual character, such as a simulated character role or an animation character role.

An application program supporting a virtual scene is installed and runs on the second device 560. The application program may be any one of a virtual reality application program, a three-dimensional map program, an FPS game, a MOBA game, an SLG game, a party casual game, or a tower defense game. The second device 560 is a device used by a second user. The second user uses the second device 560 to control a third virtual object in the virtual scene to perform an action. The action includes but is not limited to at least one of: body posture adjustment, walking, running, jumping, or attacking. For example, the third virtual object is a third virtual character, such as a simulated character role or an animation character role.

In all embodiments of the present disclosure, the application programs installed on the first device 550 and the second device 560 are the same, or the application programs installed on the two devices are the same type of application programs on different control system platforms. The first device 550 may generally refer to one of at least two devices, and the second device 560 may generally refer to one of at least two devices. This embodiment is described by using only the first device 550 and the second device 560 as examples. Device types of the first device 550 and the second device 560 are the same or different. In the following embodiments, description is made by using an example in which the device is a desktop computer.

A person skilled in the art may know that there may be more or fewer devices. For example, there may be only one device, or there may be dozens, hundreds, or more devices. A quantity of devices and the device type are not limited in the embodiments of the present disclosure.

The server 540 may be implemented as a physical server or may be implemented as a cloud server in the cloud. In all embodiments of the present disclosure, a method provided in the embodiments of the present disclosure may be applied to a cloud game scene, so that the cloud server completes computing of data logic in a game process, and a terminal is responsible for displaying a game interface.

The method for adjusting a position of a control of a virtual object provided in the present disclosure is described with reference to the above term introduction and application scenarios. The method may be performed by a server or a terminal or jointly by the server and the terminal. In this embodiment of the present disclosure, an example in which the method is performed by the terminal is used for description, as shown in FIG. 6. FIG. 6 is a flowchart of a method for adjusting a position of a control of a virtual object according to an embodiment of the present disclosure. The method includes the following operations.

Operation 610: Display an object region and an adjustment region.

An application program providing a UGC editing capability may be installed on the terminal, and a user may participate in design of game content, such as a game level, a game map, and game rules, by using a UGC editing function. For example, the terminal displays a UGC editing interface. The UGC editing interface includes an object region and an adjustment region. The user may perform a related operation on the UGC editing interface, to customize display of game content.

The object region comprises at least two virtual objects displayed therein, and the adjustment region comprises a hierarchical structure of at least two adjustment controls, which are arranged in a first direction, displayed therein. Each adjustment control is configured for adjusting display priority of a respective virtual object or a respective group of virtual objects displayed in the object region. The higher level the adjustment control is located in the hierarchical structure, the higher the display priority of the corresponding virtual object or group of virtual objects is. When multiple objects overlap in a part of the display region, the object with the highest display priority is displayed in this part.

In all embodiments of the present disclosure, the at least two virtual object controls may be associated with each other through subordination-superordination relationship in the hierarchical structure. The adjustment region comprises at least two adjustment controls, which are arranged in the first direction, displayed therein. A position of the adjustment control in hierarchical structure of the adjustment region depends on the layer in which the virtual object, controlled by such adjustment control, is located in the object region.

For example, 20 adjustment controls are arranged in the first direction, and the adjustment controls are grouped. For example, there are 5 adjustment controls in each group.

For example, [group 1-control 1, group 1-control 2, group 1-control 3, group 1-control 4, group 1-control 5] is one arrangement group; and [group 2-control 1, group 2-control 2, group 2-control 3, group 2-control 4, group 2-control 5] is a next arrangement group. After the group 1-control 2 is selected according to the vector component in the first direction, another control in the group 1 may be then selected according to the vector component in the second direction. Alternatively, after the group 1-control 2 is selected according to the vector component in the second direction, the "control 2" in another group may be then selected according to the vector component in the first direction.

In all embodiments of the present disclosure, some objects in the at least two virtual objects belong to the same layer in the object region, that is, some elements are displayed "in parallel". In this case, a group control (also called object-group control) may be displayed in the adjustment region, and adjustment controls for adjusting (herein short for "adjusting display priority among the virtual objects") these virtual objects, respectively, are subordinate to the group control. Thereby, the layer in which the virtual object is displayed in the object region is mapped to the group control to which its adjustment control is subordinate in the adjustment region.

For example, a group control 1 and a group control 2 are at the same level, i.e., level 1, in the hierarchical structure. The group control 1 is superordinate to an adjustment control 3, the group control 2 is superordinate to an adjustment control 4, and the adjustment control 3 and the adjustment control 4 are at the same level, i.e., level 2, in the hierarchical structure.

In all embodiments of the present disclosure, types of virtual objects may include, but are not limited to the following several types.
(1) Picture object: a picture, such as an animated image, a static image, or a video frame, is inserted into the object region and is displayed.
(2) Text object: a paragraph of text content, for example, static text information or scrolling text information is displayed in the object region.
(3) Item: 1. a two-dimensional item: for example, a two-dimensional pattern (including, but not limited to: a watermark pattern generated by a system/customized by a user), or a two-dimensional shape including, but not limited to: a rectangle, a square, a triangle, and a circle); and 2. three-dimensional item: for example, a three-dimensional shape (including, but not limited to: a cuboid, a cube, a cone, a triangular pyramid, and a sphere), a building element (including, but not limited to: a home and a furniture constructed by a user in a virtual scene), a virtual plant element (including, but not limited to: a flower, a tree, and a lawn in a virtual scene), and an obstacle element (including, but not limited to: a road block and a trap set by a user in a game level or a game map).
(4) Button: a specific function can be implemented after the virtual button is triggered, for example, a first virtual button has a mirroring function, and can mirror an object within a range of the button (for example, flipping an object within a range of the button along a vertical axis); or a second virtual button has a rebound function, and can rebound an object within a range of the button by a preset distance.
(5) Virtual background: configured to set a background in the object region, for example, set a color, a special effect, or a sound effect.

In all embodiments of the present disclosure, the first direction may be a vertical axis direction (e.g., a Y-axis direction in an XY coordinate system), the at least two adjustment controls in the adjustment region are arranged from top to bottom, and each adjustment control has a unique control identifier. For example, the control identifier includes at least one of: a sequential number of the control, a level in which the control is located, or a virtual object which the control is configured to adjust. The control identifier may be alternatively or additionally customized by the user.

The virtual object in the object region is mapped to a respective adjustment control (for adjusting this virtual object) in the adjustment region.

The virtual object in the object region is located in an object layer, and the object layer is configured for indicating the display priority of the virtual object among all the virtual objects in the object region. The adjustment control in the adjustment region has a control level indicating a level of the adjustment control in the hierarchical structure displayed in the adjustment region. The object layers of the virtual objects are thus mapped to the control levels of their adjustment controls.

In all embodiments of the present disclosure, an editable virtual object may be located in the object region, and the editable virtual object corresponds to an adjustment control in the adjustment region.

When the adjustment control is adjusted from one control level to another control level in the adjustment region, the display priority of the corresponding virtual object is adjusted from the display priority indicated by the control level to the display priority indicated by the another control level. The virtual object may be moved from the object layer mapped to the control level to the object layer mapped to the other control level in the object region. The virtual objects in the object region superimpose in an order indicated by the object layer, and thus content displayed in the object region follows the hierarchical structure. For a virtual object having a large volume or occupying a large area, the object layer to which it belongs changes through changing the superordinate or the level of its adjustment control in the hierarchical structure, so that the virtual object can be quickly manipulated even when the it is occluded by another object layer another object. The user does not need to repeatedly drag virtual objects arranged in the object region, thereby improving the efficiency of human-computer interaction.

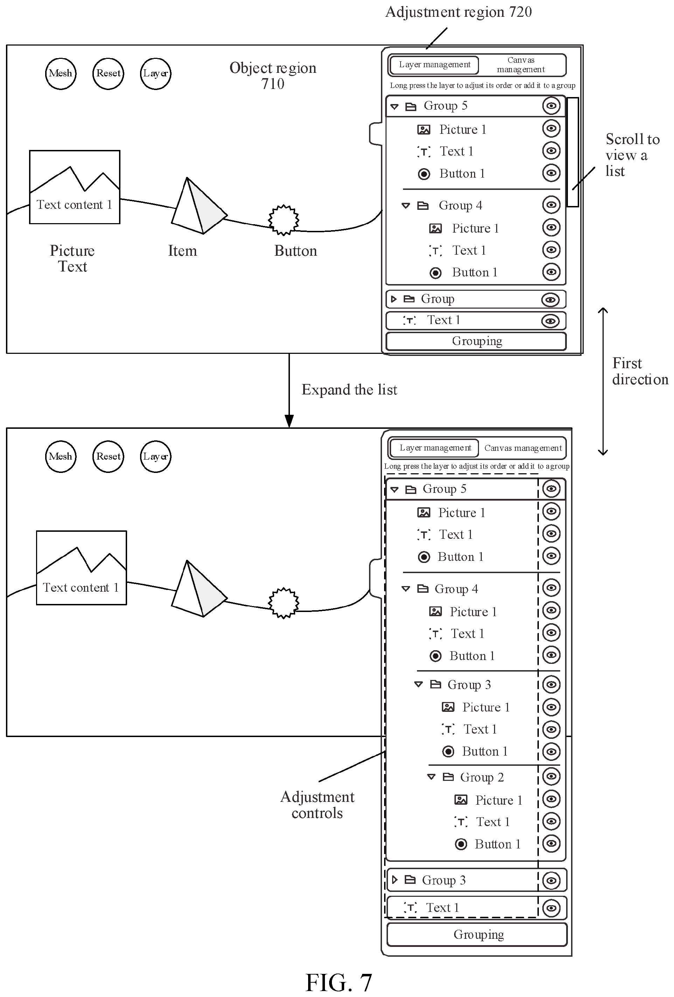

Reference is made to FIG. 7, which is a schematic diagram of an object region and an adjustment region.

The object region 710 includes a plurality of types of virtual objects, for example, a picture, an item, a button, and a text (text content 1) located in a layer above the picture. The adjustment region 720 is configured for managing an object layer of a virtual object in the object region 710.

The adjustment region 720 includes at least two adjustment controls of different virtual objects, and the adjustment controls are arranged along the first direction. The adjustment region 720 may display only a part of the adjustment controls, and the user may scroll the control list to view the hidden part of the adjustment controls.

The at least two adjustment controls include a first adjustment control, and the first adjustment control is configured for adjusting (herein short for "adjusting display priority among the virtual objects") the first virtual object among at least two virtual objects.

Operation 620: Detect a first vector component and a second vector component of a slide operation performed on the first adjustment control.

The slide operation has the first vector component in the first direction and the second vector component in the second direction. The first direction and the second direction are different directions.

In all embodiments of the present disclosure, the first direction may be a vertical axis direction (the Y-axis direction in the XY coordinate system), the second direction is a horizontal axis direction (an X-axis direction in the XY coordinate system), and the first direction and the second direction are perpendicular to each other.

For example, the slide operation may include at least two slide stages, i.e., a first slide stage and a second slide stage. At the first slide stage, the slide operation is performed along the first direction and corresponds to generation of the first vector component. At the second slide stage, the slide operation is performed along the second direction and corresponds to generation of the second vector component. The first slide stage and the second slide stage are sequential with no interruption such as releasing a finger, etc.

As another example, the slide operation includes only one slide stage. For example, the slide operation is performed along a preset direction, and the first vector component is determined according to an angle between the preset direction and the first direction and a slide distance of the slide operation, and the second vector component is determined according to an angle between the preset direction and the second direction and the slide distance of the slide operation.

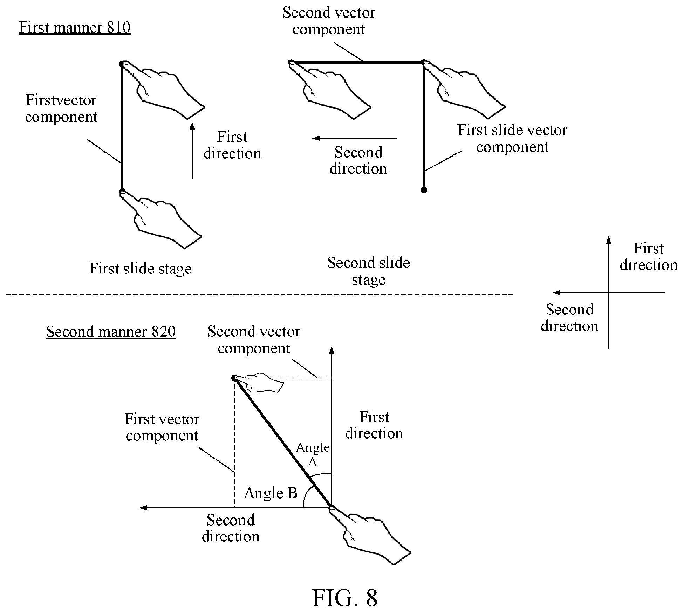

Reference is made to FIG. 8 which is a schematic diagram of two manners of determining vector components.

In first manner 810, a sliding direction at each slide stage is either the first direction or the second direction, and a slide distance in the direction serves as magnitude of the vector component in the direction.

In a slide process, if the user directly follows the first direction and the second direction to perform the slide operation at different slide stages, respectively, the selected position of the first adjustment control can be obtained directly to determine a display effect after the control adjustment, thereby improving efficiency of control adjustment. A sliding distance of each slide stage is used as magnitude of the corresponding vector component, so that accuracy of slide data can be improved, an adjustment control can be accurately adjusted, a computer resource can be saved, and an effect of control adjustment can be improved.

In second manner 820, the angle between the slide direction and the first direction is A, and the first vector component in the first direction is obtained according to a product of the slide distance and a cosine value of the angle A. The angle between the slide direction and the second direction is B, and the second vector component in the second direction is obtained according to a product of the slide distance and a cosine value of the angle B.

When the vector component is determined in the second manner 820, a slide track of the slide operation may not be a straight line, and the sliding direction follow a line drawn from a start point to an end point of the slide operation, which is a basis for determining the angle and the vector component.

Hence the user may slide freely, and the slide process does not need to be divided into two sequential stages, thereby reducing operation difficultly for the user. A slide in the same direction generates two vector components, so that a slide distance and operation duration can be reduced, and efficiency of control adjustment can be improved.

Operation 630: Adjust, in the adjustment region, a position of the first adjustment control in the hierarchical structure according to the first vector component and the second vector component, and adjust, in the object region, the first virtual object according to the position of the first adjustment control in the hierarchical structure.

In all embodiments of the present disclosure, a first target position may be determined in the first direction according to the first vector component. The first target position is mapped to at least one candidate control.

The first target position refers to a position (the foregoing selected position) to which the first adjustment control is to be moved. The position is mapped to at least one adjacent candidate control. After being moved to the selected position, the first adjustment control is adjacent to the at least one candidate control, and the first adjustment control and the at least one candidate control are at the same level as siblings in the hierarchical structure.

For example, the first direction is the vertical axis direction, and there are n adjustment controls arranged in the first direction from top to bottom. The first vector component of the slide operation points upward, and the first vector component ends at the first target position.

If the first target position is located immediately above the i^{th} adjustment control among the n adjustment controls along the first direction, the at least one candidate control mapped to the first target position may be determined to be the i^{th} adjustment control and all adjustment controls above the i^{th} adjustment control (that is, the 1^{st} adjustment control to the i^{th} adjustment control). Here i and n are positive integers.

A second adjustment control is then determined from the at least one candidate control according to the second vector component. The first adjustment control after the adjustment depends on a control level to which the second adjustment control belongs. The control level of the adjusted first adjustment control is the same as the control level of the second adjustment control in the hierarchical structure.

For example, when determining the selected position for the first adjustment control, the first target position at which the slide operation ends is first determined along the first direction using the first vector component, and then the second adjustment control is determined from the at least one candidate control mapped to the first target position with reference to the second vector component. Thus, when the adjusted first adjustment control is finally displayed, the level of the adjusted first adjustment control is determined according to the control level of the second adjustment control.

As an alternative, a second target position in the second direction may be determined according to the second vector component. The second adjustment control is determined from at least one candidate control mapped to the second target position according to the first vector component. The adjusted first adjustment control is displayed according to the control level of the second adjustment control. In this case, the second target position at which the slide operation ends is first determined in the second direction using the second vector component, and then the second adjustment control is determined from the at least one candidate control mapped to the second target position with reference to the first vector component. The control level of the adjusted first adjustment control is determined as the control level to which the second adjustment control belongs.

That is, when determining how to display the adjusted first adjustment control according to the first vector component and the second vector component, the first vector component may be first analyzed and the second vector component is then analyzed, or the second vector component may be first analyzed and the first vector component is then analyzed. The analysis process is quite flexible, which facilitates precise control adjustment and provides natural and intuitive user experience, thereby improving display flexibility of the adjustment control.

Compared with a conventional manner in which the user drags only in the same direction, determining the selected position of the first adjustment control by using vector components in at least two directions can reduce a distance for which the user moves the adjustment control in the sliding operation and time spent on the sliding operation, thereby improving the efficiency of human-computer interaction. When there are a large number of controls, some adjustment controls that do not meet a condition would not be traversed, since the selection position is determined according to vector components in different slide directions. It is not necessary to frequently collapse and expand the control list which can provide strong convenience to a user operation.

In all embodiments of the present disclosure, each of the at least two adjustment controls may have a respective component for visualizing selection on such adjustment control. During the slide operation, the at least one component of the at least one candidate control is highlighted sequentially, one component at a time, according to a currently detected second vector component. That is, the second vector component is detected in real time, and the highlighted component is determined according to the currently detected second vector component.

In response to the second vector component terminating, a candidate control, of which the component is currently highlighted, among the at least one candidate control is determined to serve as the second adjustment control.

For example, a display style of the component indicates whether the corresponding adjustment control is currently selected in the adjustment region. After the candidate control(s) mapped to the first target position is selected according to the first vector component in the first direction, the component(s) corresponding to the candidate control(s) selected during generation of the second vector component may be flexibly highlighted according to the sliding distance along the second direction, which is indicated by the second vector component. The highlighting includes at least one of: highlighting in color (for example, a default effect is gray, and the highlight effect is yellow) or highlighting in font (for example, a default effect is a medium font size, and the highlight effect is a large font size).

Highlighting the component can clearly and intuitively indicate the selected position in real time during the process of adjustment, helping the user select the second adjustment control from the at least one candidate control, thereby improving efficiency in the control adjustment process.

The types of the components include, but are not limited to: (1) an underline, displayed at a lower edge of the corresponding adjustment control, where underlines of adjustment controls in different control levels have different lengths; (2) a predetermined color, where adjustment controls in different control levels have different control colors; (3) an identifier, where adjustment controls in different control levels has different control identifiers, and the control identifier may be at least one of a naming format, a control name, a control thumbnail, or the like; and (4) a frame with a predetermined length, where adjustment controls in different control levels has different lengths when being displayed.

Different components function as prompts during the adjustment, so that the user can learn the selection position in real time and handle the adjustment easily. The user is guided to continue a subsequent operation to reach a desired result of adjustment, thereby improving the efficiency of human-computer interaction. In addition, the component can also increase richness of a displayed picture.

It is taken as an example that the component includes the underline.

The underline of a currently selected candidate control is displayed, while the underline of each candidate control other than the currently selected candidate control is not displayed. The currently selected candidate control is determined from the at least one candidate control according to the currently detected second vector component. As an example, the underline of the currently selected candidate control has a length closest to the magnitude of the currently detected second vector component among the all candidate controls.

The manner of using the underline as the component for distinguishing the selected candidate control is simple and intuitive. Whether a control is currently selected can be determined by checking whether the underline of the control is displayed or not. The underline occupies a small area in the picture, which can save space in the adjustment region, avoid congested pictures, and reduce resources consumed by a computer when the computer loads the picture.

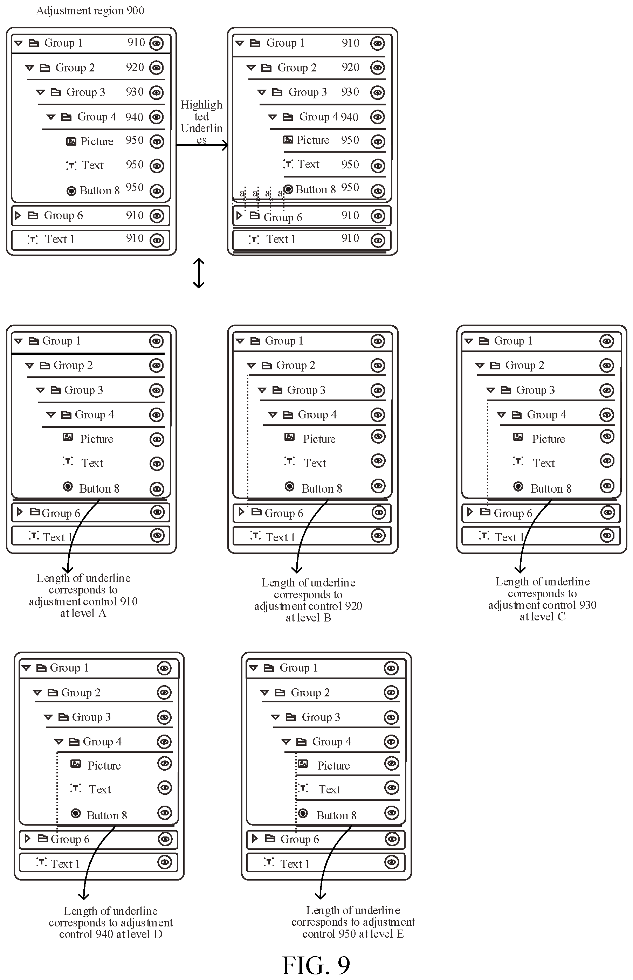

Reference is made to FIG. 9, which is a schematic diagram of displaying an underline according to a second vector component.

The adjustment region 900 displays adjustment controls of five levels, which are: a level A having an adjustment control 910, a level B having an adjustment control 920, a level C having an adjustment control 930, a level D having an adjustment control 940, and a level E having adjustment controls 950. The adjustment control(s) at each level have the underline(s) of the same length, and the adjustment controls at different levels have the underlines of different lengths.

For example, as shown in FIG. 9, lengths of the underlines have following relationship : the adjustment control 910 in the level A > the adjustment control 920 in the level B > the adjustment control 930 in the level C > the adjustment control 940 in the level D > the adjustment controls 950 in the level E.

In all embodiments of the present disclosure, a difference between lengths of underlines of adjacent levels is equal to a preset length of a unit distances, where a is a positive number. For example, a difference between the length of the underline of the adjustment control 910 in the level A and the length of the underline of the adjustment control 920 in the level B is the preset length, i.e., a (in unit distances). A difference between the length of the underline of the adjustment control 910 in the level A and the length of the underline of the adjustment control 930 in the level C is two times the preset length, that is, 2a. Other differences can be obtained in analogy.

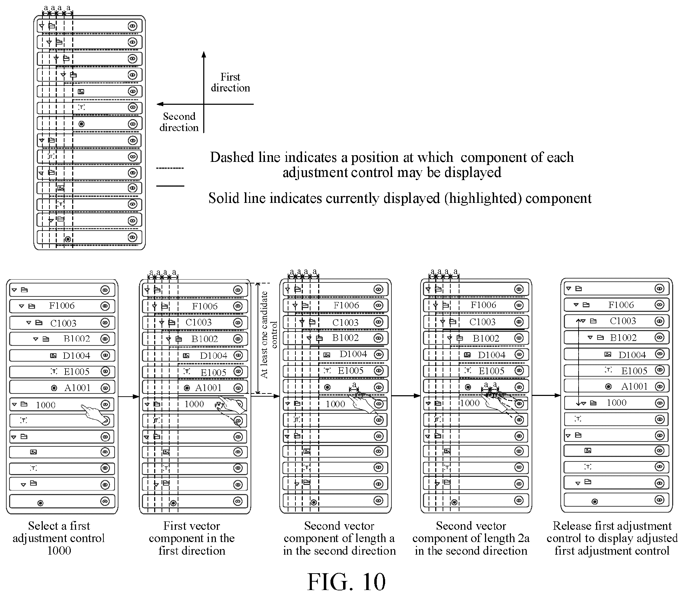

Reference is made to FIG. 10, which is a schematic diagram of a process of adjusting a position of a first adjustment control according to a first vector component and a second vector component.

As shown in FIG. 10, a dashed line indicates a length of the underline of a corresponding adjustment control and a position at which the underline of the adjustment control is displayed when being highlighted, and a solid line is used to indicate the underline being highlighted.

The user selects and moves the first adjustment control 1000 in the first direction (upward), and the first target position is determined according to the first vector component. The first target position is mapped to an adjustment control A1001, and thus the underline of the adjustment control A1001 is highlighted. It is determined that the at least one candidate control comprises the adjustment control A1001 and the adjustment controls above the adjustment control A1001 along the first direction. The first adjustment control 1000 is subject to a slide along the second direction (leftward), and the second adjustment control is determined according to the second vector component. When the second vector component has magnitude of a, the underline of an adjustment control B1002 is highlighted. When the second vector component has magnitude of 2a, the underline of an adjustment control C1003 is highlighted. The adjustment control C1003 is superordinate to the adjustment control B1002, and the adjustment control B1002 is superordinate to the adjustment control A1001.

It is assumed that the user releases the first adjustment control 1000 when the second vector component has magnitude of 2a, and that the second adjustment control is the adjustment control C1003. The adjusted first adjustment control 1000 is displayed. The adjusted first adjustment control 1000 and the adjustment control C1003 are siblings in the same layer of the hierarchical structure. The adjustment control C1003 is expanded to show the adjustment control B1002, and the adjustment control B1002 is also expanded to show the adjustment control A1001, adjustment control D1004, and adjustment control E1005. Thus, the adjusted first adjustment control 1000 is displayed in adjacency to the adjustment control A1001 at the bottom of the expanded adjustment control C1003.

Because the adjustment control C1003 is subordinate to an adjustment control F1006, the adjusted first adjustment control 1000 is also subordinate to the adjustment control F1006.

As an alternative, at least one candidate control may be first determined according to the second vector component, and the second adjustment control is then determined from the at least one candidate control according to the first vector component, thereby implementing level adjustment for the first adjustment control.

A plurality of manners of determining the vector component and determining the second adjustment control according to the vector component can all accurately adjust a control when the user slides in any manner, thereby improving the efficiency of human-computer interaction.

In all embodiments of the present disclosure, each of the at least two adjustment controls may have a respective component. After the slide operation is detected, a first level is determined from all levels in the hierarchical structure according to the second vector component, where one or more adjustment controls are in the first level among the at least two adjustment controls.

The at least two adjustment controls are distributed among the levels (herein also called control levels) of the hierarchical structure. For example, an adjustment control A and an adjustment control B are in a control level 1, and an adjustment control C is in a control level 2. The at least two adjustment controls include the adjustment control A, the adjustment control B, and the adjustment control C, and the at least two control levels include the control level 1 and the control level 2.

A superordination-subordination relationship associates the at least two control levels. For example, if the control level 2 is subordinate to the control level 1, the adjustment control C in the control level 2 is also subordinate to the control level 1.

For example, the at least two control levels having the superordination-subordination relationship are usually arranged with different indentations. As shown in FIG. 9, the "group 2" subordinate to the "group 1" is arranged with larger indentation than the "group 1". Similarly, "image", "text", and the like subordinate to the "group 4" are also arranged with larger indentation that the group "4", which more intuitively display the superordination-subordination relationship between control levels.

The second vector component is a vector component of the slide operation in the second direction. After the second vector component is determined according to the slide operation, the first level is determined from the levels according to the second vector component, and the first level corresponds to the component indicated by the second vector component.

The component of the adjustment control(s) the first control level may be called a first component.

For example, the at least two adjustment controls include at least one adjustment control having the first control level, and the first component indicates that the corresponding adjustment control being in the first control level. For example, the first component is a solid underline, and each adjustment control in the first control level is displayed with the solid underline. As an example, the underline(s) of the adjustment control(s) in the first control level have a length closest to the magnitude of the currently detected second vector component among the levels

It is taken as an example that the component is the underline. The at least two adjustment controls are distributed among five control levels: (1) when magnitude of the second vector component ranges in (0, d], the level E is the first control level determined according to the second vector component, the first component of each adjustment control in the level E is displayed (that is, each adjustment control in the level E is displayed with the first component), and the adjustment control(s) in the level E serve as candidate control; (2) when magnitude of the second vector component ranges in (d, d+a], the level D is the first control level determined according to the second vector component, the first component of each adjustment control in the level D is displayed (that is, each adjustment control in the level D is displayed with the first component), and the adjustment control(s) in the level D serve as candidate control; (3) when magnitude of the second vector component ranges in (d+a, d+2a], the level C is the first control level determined according to the second vector component, the first component of each adjustment control in the level C is displayed (that is, each adjustment control in the level C is displayed with the first component), and the adjustment control(s) in the level C serve as candidate control; (4) hen magnitude of the second vector component ranges in (d+2a, d+3a], the level B is the first control level determined according to the second vector component, the first component of each adjustment control in the level B is displayed (that is, each adjustment control in the level B is displayed with the first component), and the adjustment control(s) in the level B serve as candidate control;; and (5) when magnitude of the second vector component ranges in (d+3a, d+4a], the level A is the first control level determined according to the second vector component, the first component of each adjustment control in the level A is displayed (that is, each adjustment control in the level A is displayed with the first component), and the adjustment control(s) in the level A serve as candidate control. d is a positive number, and the above ranges are in unit distances.

For example, the second vector component is d+3a, each adjustment control in the level B serves as candidate controls, and each adjustment control in the level B is displayed with the first component, for example, the adjustment control in the level B has the highlighted component.

In all embodiments of the present disclosure, a third adjustment control may be determined from the one or more adjustment controls in the first level according to the first vector component. The first adjustment control is adjusted in the adjustment region to be a sibling of the third adjustment control in the first level of the hierarchical structure.

In all embodiments of the present disclosure, any one of the one or more adjustment controls in the first level may serve as a start point of the first vector component, and the third adjustment control is determined according to the detected first vector component. As an example, the third adjustment control is the adjustment control located closest to the end point of the first vector component.

For example, the first direction is along a vertical axis, and the adjustment control(s) in the level B are arranged in the first direction from top to bottom as: an adjustment control 1, an adjustment control 2, and an adjustment control 3. It is assumed that the adjustment control 2 serves as the start point of the first vector component.

When magnitude of the first vector component is in a range of (0, m], the start point (the adjustment control 2) is determined as the third adjustment control. When magnitude of the upward first vector component is in a range of the first direction is (m, 2m], the adjustment control 1 is determined as the third adjustment control. When magnitude of the downward first vector component in the first direction is (m, 2m], the adjustment control 3 is determined as the third adjustment control.

For example, the first control level of the third adjustment control is used as the level of the adjusted first adjustment control. In addition, the first adjustment control may be flexibly displayed according to a position of the third adjustment control. For example, the first adjustment control is displayed above the third adjustment control, that is, the third adjustment control and the first adjustment control are siblings, and the first adjustment control is located above the third adjustment control along the first direction. Alternatively, the first adjustment control is displayed below the third adjustment control, that is, the third adjustment control and the first adjustment control are siblings, and the first adjustment control is located below the third adjustment control along the first direction. This is not limited herein.

Hereinabove it is described that the first control level is first determined according to the second vector component, and the third adjustment control is then determined from the adjustment controls at the first control level according to the first vector component, so as to determine how to display the adjusted first adjustment control. This process helps to achieve precise control of levels and efficient user interaction and helps to provide a more intuitive and ordered interaction process, to enable the user to balance selection in a large range and adjustment of details. This process also helps to improve analysis and calculation efficiency of a computer, helps the user to achieve more precise feedback and control, and enhances a response speed and operation flexibility of the terminal.

In all embodiments of the present disclosure, during the slide operation, the user may cancel the level adjustment on the first adjustment control.

In all embodiments of the present disclosure, after detecting the first vector component and the second vector component of the slide operation performed on the first adjustment control, adjustment on the position of the first adjustment control may be cancelled in the adjustment region, and visual information indicating that the adjustment is cancelled may be displayed, when a sliding distance of the slide operation meets a cancellation condition. In this case, the first adjustment control is maintained at its original position in the adjustment region, and the first virtual object is maintained at its original position in the object region.

For example, the cancellation condition is a preset condition configured for automatically triggering cancellation of the adjustment on the adjustment control. In all embodiments of the present disclosure, the cancellation condition may be that the slide distance of the slide operation reaches a preset distance threshold, duration of the slide operation reaches a preset duration threshold, or a slide track of the slide operation does not conform to a preset pattern (such as a straight-line or a sectoral track). This is not limited herein.

The visual information may comprise indication of the cancellation . For example, visual information may be text "The adjustment has been canceled" or may be simply highlighting edge of the screen (for example, a screen of the terminal displays a red highlight edge), or the like. This is not limited herein.

For example, as shown in FIG. 7, when the user releases the first adjustment control after sliding to the object region 710, a slide distance is determined to meet the cancellation condition, adjustment of the first adjustment control is canceled, and the visual information is correspondingly displayed. Based on the display of the visual information, an original position of the first adjustment control in the adjustment region before the sliding operation is maintained, and a display status of the first virtual object in the object region before the sliding operation is also maintained.

In the foregoing process, adjustment on the adjustment control may be automatically triggered to be canceled according to the cancellation condition such as the slide distance, so that the user operation process has fault tolerance, to avoid an impact of a slide operation caused by a false touch on levels of the adjustment controls, thereby helping the user to change an adjustment type in time. Clearer feedback information is also provided by using the adjustment cancellation prompt information, to facilitate stability of an element layout, improve operation experience of the user, enhance flexibility and maintainability of terminal display, and improve the efficiency of human-computer interaction.

In all embodiments of the present disclosure, when the slide operation has the first vector component in the first direction only, the adjustment may also be implemented.

In all embodiments of the present disclosure, the at least two adjustment controls may comprise one or more single-object controls and one or more object-group controls, each object-group control is at least superordinate to another object-group control or a single-object control in the hierarchical structure, and each of the one or more single-object controls and the one or more object-group controls has a respective component.

The object-group control is superordinate to at least one single-object control, and the object-group control at a higher level may be superordinate to an object-group control at a lower level.

For example, the adjustment region includes the following adjustment controls arranged in descending order of levels: a first object-group control A, a second object-group control B, and a single-object control C.

The single-object control C is subordinate to the second object-group control B, and the second object-group control B is subordinate to the first object-group control A.

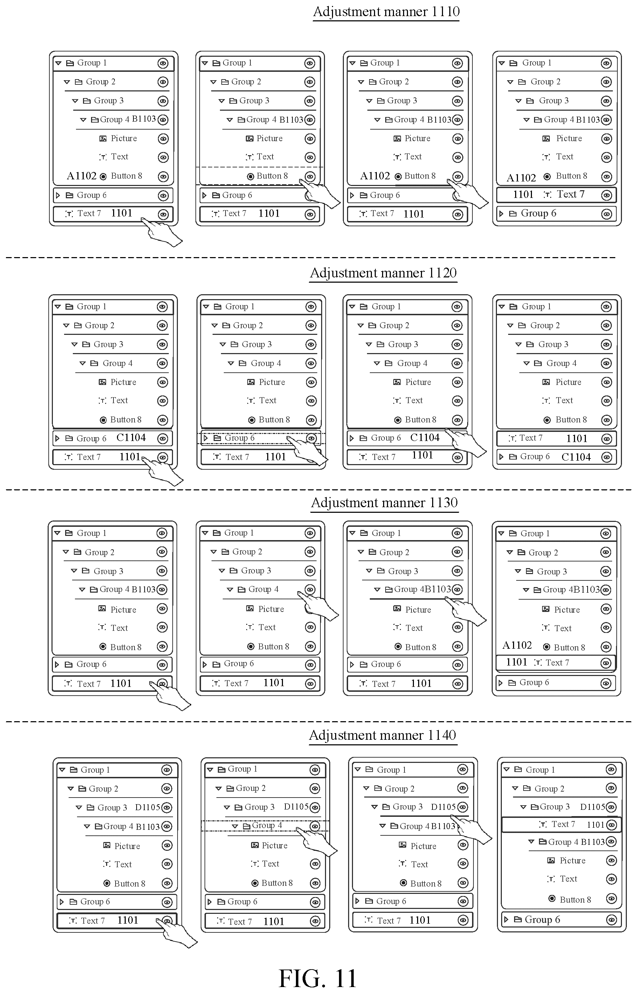

Reference is made to FIG. 11, which is a schematic diagram of a manner of adjusting a level of an adjustment control according to a first vector component.

It is taken as an example that the component of an adjustment control is the underline. A length of the underline indicates a level of the corresponding adjustment control. A display position of the underline indicates the adjustment control to which the underline belongs.

Adjustment manner 1110 is as follows. A first adjustment control 1101 is selected and slid in the first direction, and the component of a single-object control A1102 is currently displayed. It is determined that the selected position is located below the single-object control A1102 along the first direction. After being released, the first adjustment control 1101 and the single-object control A1102 are siblings in the same level. Because the single-object control A1102 is subordinate to an object-group control B1103, the adjusted first adjustment control 1101 is also subordinate to the object-group control B1103.

Adjustment manner 1120 is as follows. The first adjustment control 1101 is selected and slid in the first direction, and the component of a single-object control C1104 is currently displayed. It is determined that the selected position is located immediately above the single-object control C1104 along the first direction. After being released, the first adjustment control 1101 and the single-object control C1104 are siblings at the same level. Because the single-object control C1104 is not subordinate to any object-group control, the adjusted first adjustment control 1101 is not subordinate to any object-group control.

Adjustment manner 1130 is as follows. The first adjustment control 1101 is selected and slid in the first direction, and the component of an object-group control B1103 is currently displayed. It is determined that the selected position is located immediately below the object-group control B1103. After being released, the first adjustment control 1101 and the object-group control B1103 are siblings at the same level. Because the object-group control B1103 is superordinate to at least two single-object controls (where the lowest is the single-object control A1102) and is now expanded to display the single-object controls, the first adjustment control 1101 is displayed in adjacency to the single-object control A1102 and is in the same level as the object-group control B1103.

Adjustment manner 1140 is as follows. The first adjustment control 1101 is selected and slid in the first direction, and the component of the object-group control B1103 is currently displayed. It is determined that the selected position is located immediately above the object-group control B1103, and the first adjustment control 1101 and the object-group control B1103 are siblings in the same level. Because the object-group control B1103 is subordinate to an object-group control D1105, the adjusted first adjustment control 1101 is also subordinate to the object-group control D1105.

In all embodiments of the present disclosure, after the user customizes the names of the adjustment controls, the names of adjustment controls in the same level may be aligned. Thus, the superordination-subordination relationship between different adjustment controls can be intuitively presented, helping the user understand an arrangement between at least two controls, and improving efficiency during control adjustment.

In all embodiments of the present disclosure, when level adjustment is performed on the first adjustment control, the first adjustment control may be inserted into an object-group control. When the object-group control includes another adjustment control, the object-group control is expanded to show the other adjustment control or is collapsed to hide the other adjustment control, and a position of the first adjustment control in the object-group control is not changed. The position of the first adjustment control in the object-group control may be arbitrary.

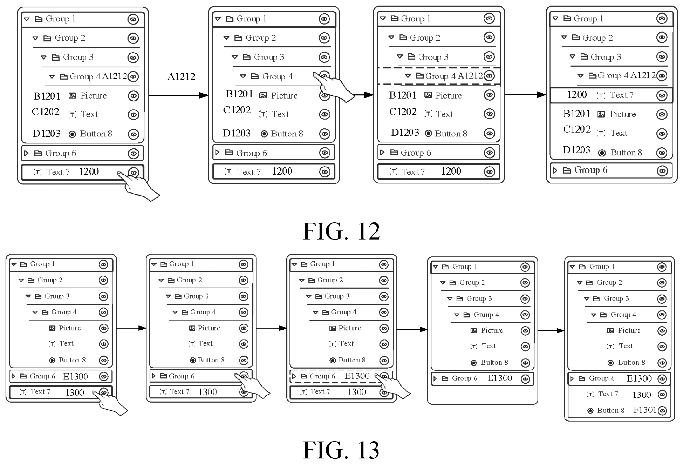

Reference is made to FIG. 12 which is a schematic diagram of expanding a single-object control by an object-group control.

An object-group control A1212 is expanded to show a single-object control B1201, a single-object control C1202, and a single-object control D1203 from top to bottom in the sequence. A first adjustment control 1200 is inserted into the object-group control A1212 (for example, is inserted into any position indicating its subordination to the object-group control A1212). The first adjustment control 1200 may be adjacent to the single-object control B1201 and is located immediately above the single-object control B1201, and it becomes a sibling of the single-object control B1201, the single-object control C1202, and the single-object control D1203.

Reference is made to FIG. 13, which is a schematic diagram of collapsing a single-object control by an object-group control.

An object-group control E1300 is collapsed to hide an adjustment control F1301. The first adjustment control 1300 is inserted into the object-group control E1300. In this case, the object-group control E1300 is collapsed to also hide the first adjustment control 1300. After adjustment is completed, the object-group control E1300 is expanded. The first adjustment control 1300 may be located immediately above the single-object control F1301 and become a sibling of the single-object control F1301.

Before detecting the slide operation of the user, the terminal may perform region division for each adjustment control in the adjustment region. After the slide operation is detected, if the first vector component indicates insertion to adjacency, the first adjustment control is inserted into a position adjacent to a target adjustment control (which may be a single-object control or an object-group control). After the insertion, the first adjustment control and the control becomes siblings. If the first vector component indicates insertion into group, the first adjustment control is inserted into subordinates of the object-group control. After the insertion, the first adjustment control is subordinate to the object-group control, and a level of the object-group control is higher than the level of the first adjustment control.

The region is divided, and a vector component is calculated in time after the slide operation is detected to determine an adjustment type that a user expects from the adjustment, thereby improving the efficiency of human-computer interaction. Images showing different adjustment types are correspondingly displayed during the slide operation, helping the user to learn a control adjustment result.

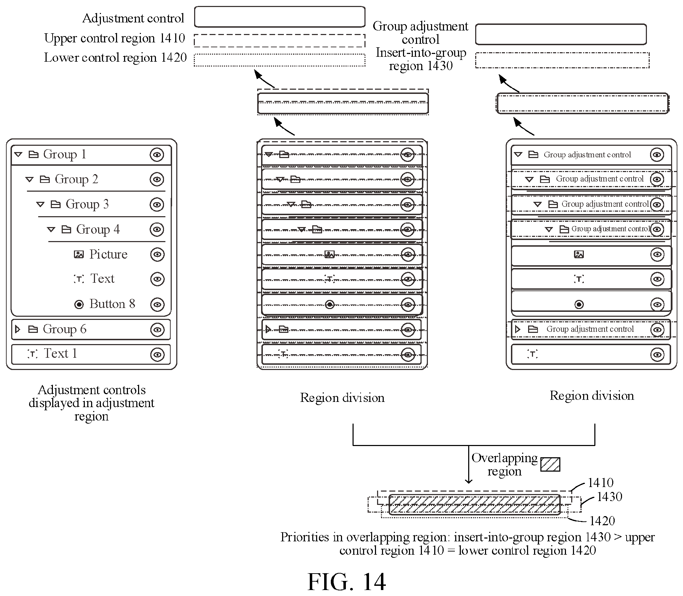

Reference is made to FIG. 14, which is a schematic diagram of a process in which a terminal determines a control adjustment type.

Each adjustment control (which may be a single-object control or an object-group control) in the adjustment region has an upper control region 1410 and a lower control region 1420. The object-group control further has an insert-into-group region 1430.

When the slide operation performed on the first adjustment control indicates that the selected position is in the upper control region 1410 (e.g., ends in such region) of an adjustment control A, after the user releases the first adjustment control, the terminal determines to insert the first adjustment control at an adjacent position immediately above the adjustment control A along the first direction. The first adjustment control becomes a sibling of the adjustment control A.

When the slide operation performed on the first adjustment control indicates that the selected position is in the lower control region 1420 of an adjustment control A, after the user releases the first adjustment control, the terminal determines to insert the first adjustment control at an adjacent position immediately below the adjustment control A. The first adjustment control becomes a sibling of the adjustment control A.

When the slide operation performed on the first adjustment control indicates that the selected position is in the insert-into-group region 1430 of an object-group control B, and after the user releases the first adjustment control, the terminal determines to insert the first adjustment control in the object-group control B. The first adjustment control is subordinate to the object-group control B, and a level of the object-group control B is higher than the level of the first adjustment control.

For the object-group control, the insert-into-group region 1430 and the upper control region 1410 may overlap, and/or the insert-into-group region 1430 and the lower control region 1420 may overlap. When the slide operation indicates that the selected position is located in the overlapping region, the adjustment type of the slide operation needs to be determined from the two adjustment types (that is, insertion at an adjacent position or insertion as subordinate). Priorities of the overlapping regions are as follows: the insert-into-group region 1430 > the upper control region 1410 = the lower control region 1420.

That is, inserting the first adjustment control as subordinate of the object-group control is preferential in the overlapping region, and in this case the terminal displays a picture of the first adjustment control being inserted as subordinate of the object-group control.

An adjustment type determining manner of choosing to set a priority of the overlapping region can provide more operating space for the user to perform an operation and determine a control adjustment type expected by the user in time, thereby improving the efficiency of human-computer interaction. Compared with a manner of performing strictly non-overlapping region division on an adjustment control, this manner can reduce operation difficult for a user, and the user does not need to precisely recognize a boundary line to adjust the control, thereby improving efficiency in a control adjustment process.

Hence, the object region and the corresponding adjustment region are displayed. When the at least two adjustment controls arranged in the first direction in the adjustment region are rearranged, display priority of their corresponding virtual objects are also adjusted in the object region, that is, layers of the virtual objects in the object region are adjusted. The slide operation performed on the adjustment control is detected, and the position of the adjustment control is adjusted based on the slide operation. The slide operation has vector components along the first direction and the second direction, so that the adjustment control can be adjusted accurately with reference to at least two directions. When there are a lot of adjustment controls in the adjustment region, it is unnecessary to collapse or expand the controls frequently in the control list during the adjustment of display priority the virtual objections. Since rearrangement of the adjustment control is implemented with reference to the vector components of the same slide operation in different directions, the rearrangement is convenient and thus human-computer interaction is more efficient.

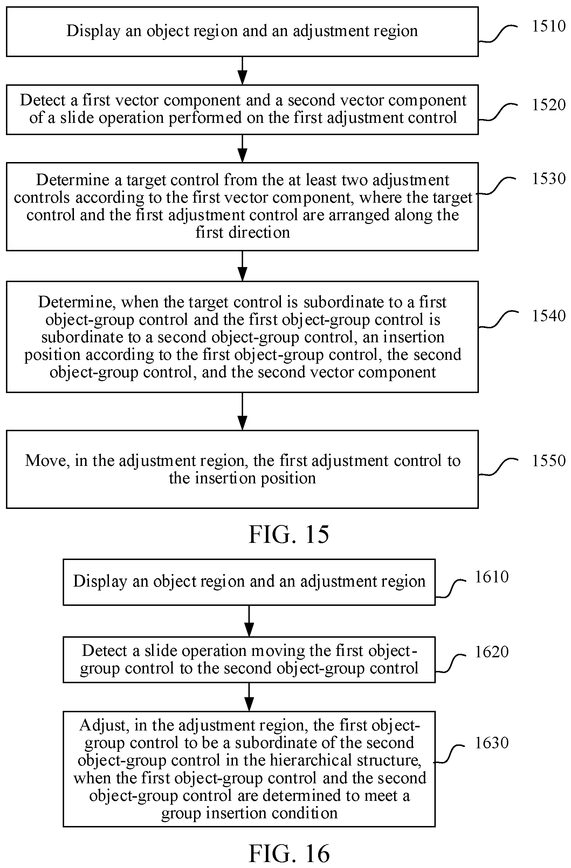

In all embodiments of the present disclosure, the at least two adjustment controls comprise one or more single-object controls and one or more object-group controls, each object-group control is at least superordinate to another object-group control or a single-object control in the hierarchical structure, and each of the one or more single-object controls and the one or more object-group controls has a respective component. When the level of the first adjustment control is adjusted according to the vector component, it needs to be considered whether a superordinate-subordinate relationship exists between the object-group control and the selected position at which the first adjustment control is inserted. FIG. 15 is a flowchart of a method for adjusting a position of a control of a virtual object according to another embodiment of the present disclosure. The method includes the following operations.

Operation 1510: Display an object region and an adjustment region.

The object region comprises at least two virtual objects, the adjustment region comprises a hierarchical structure of at least two adjustment controls, and the at least two adjustment controls when being displayed are arranged along a first direction in the hierarchical structure, i.e., adjustment controls that are currently displayed (not hidden) in the in the hierarchical structure are arranged along the first direction. The at least two adjustment controls comprise a first adjustment control, and the first adjustment control is configured for adjusting a display parameter of a first virtual object among the at least two virtual objects.

Operation 1520: Detect a first vector component and a second vector component of a slide operation performed on the first adjustment control.

The slide operation includes the first vector component in the first direction and the second vector component in a second direction. The first direction and the second direction are different directions.

In all embodiments of the present disclosure, the first direction may be a vertical direction, the second direction is a horizontal direction, and the first direction and the second direction are perpendicular to each other.

Operation 1530: Determine a target control from the at least two adjustment controls according to the first vector component, where the target control and the first adjustment control are arranged along the first direction.

For example, the target control is an adjustment control determined according to the first vector component from the at least two adjustment controls included in the control list. In all embodiments of the present disclosure, a single adjustment control may be determined according to the first vector component from the at least two adjustment controls as the target control. For example, the first vector component represents a vector component distance of the slide operation in the first direction, the original location of first adjustment control serves as a start point of the first vector component, and an adjustment control at an end point of the first vector component serves as the target control.

A position (i.e., the foregoing selected position) adjacent to the target control serves as a target position at which the first adjustment control is to be inserted.

For example, the first vector component indicates that the target control is an adjustment control A. If the user releases the first adjustment control (that is, the end point is determined) at this time, the first adjustment control is inserted at an adjacent position of the adjustment control A to complete level adjustment for the first adjustment control. The first adjustment control after the level adjustment becomes a sibling of the adjustment control A in the hierarchical structure.

Operation 1540: determine, when the target control is subordinate to a first object-group control and the first object-group control is subordinate to a second object-group control, an insertion position according to the first object-group control, the second object-group control, and the second vector component.

The superordinate-subordinate relationship is configured for between two object-group controls. For example, the first object-group control is subordinate to the second object-group control.

When the target control is subordinate to the first object-group control and the first object-group control is subordinate to the second object-group control, the components of the target control, the first object-group control, and the second object-group control are highlighted sequentially, one at a time, in the adjustment region. The second vector component is detected in real time, and the highlighted component is determined according to the currently detected second vector component. As an example, the currently highlighted underline has a length closest to the magnitude of the currently detected second vector component among the the target control, the first object-group control, and the second object-group control
That is, the second object-group control (which may be understood as a large group) is superordinate to the first object-group control (a subgroup), and the first object-group control is superordinate to the target control (a control).

The foregoing content describes a solution of comprehensively switching the highlight effect between the target control, the first object-group control, and the second object-group control according to the second vector component. This process enables an interface adjustment process to switch display of the highlight effect according to the second vector component, greatly enhancing identifiability of the control and intuitiveness of the interface, also enhancing accuracy of a user operation, strengthening a visual association between control levels respectively corresponding to different controls, and helping the user better understand a control level structure, to adapt to more scenarios and wider user requirements.

In all embodiments of the present disclosure, determining the insertion position according to the first object-group control, the second object-group control, and the second vector component may comprise following cases.

In a first case, in response to the slide operation terminating when the component of the target control is highlighted, a position representing subordination to the first object-group control is determined to serve as the insertion position. The first adjustment control at the insertion position and the target control are siblings in the hierarchical structure.

It is taken as an example that the component is the underline. A length of the underline of the target control is d (in unit distances), a length of the underline of the first object-group control is d+a (in unit distances), and a length of the underline of the second object-group control is d+2a (in unit distances), where d and a are positive numbers.

When magnitude of the second vector component is in a range of [d, d+a), the underline of the target control is highlighted. If the second vector component terminates (i.e., the sliding operation terminates) at this time, it is determined that the first adjustment control and the target control are siblings in the same level. Because the target control is subordinate to the first object-group control, the adjusted first adjustment control is also subordinate to the first object-group control.

In a second case, in response to the slide operation terminating when the component of the first object-group control is highlighted, a position representing subordination to the second object-group control is determined to serve as the insertion position. The adjusted first adjustment control at the insertion position and the first object-group control are siblings in the hierarchical structure.

When magnitude of the second vector component is in a range of [d+a, d+2a), the underline of the first object-group control is highlighted. If the second vector component terminates (i.e., the sliding operation terminates) at this time, it is determined that the first adjustment control and the first object-group control are siblings in the same level. Because the target control is subordinate to the second object-group control, the adjusted first adjustment control is also subordinate to the second object-group control.

In a third case, in response to the slide operation terminating when the component of the second object-group control is highlighted, a position adjacent to the second object-group control is determined to serve as the insertion position. The adjusted first adjustment control at the insertion position and the second object-group control are siblings in the hierarchical structure.

When magnitude of the second vector component is in a range of [d+2a, d+3a), the underline of the second object-group control is highlighted. If the second vector component terminates (i.e., the sliding operation terminates) at this time, it is determined that the first adjustment control and the second object-group control are siblings in the same level. Because the target control is subordinate to no object-group control, the adjusted first adjustment control is also subordinate to no object-group control.

The foregoing content describes displaying a solution of different control adjustment results according to the superordinate-subordinate relationship between the adjustment controls. In a process of switching the highlight effect among adjustment controls, if the target control has the highlighted component, the level of the target control serves as the level of the adjusted first adjustment control; if the first object-group control has the highlighted component, the level of the first object-group control serves as the level of the adjusted first adjustment control; and if the second object-group control has the highlighted component, the level of the second object-group control serves as the level of the adjusted first adjustment control. The foregoing control level adjustment logic implemented according to the highlight effect helps the user control a hierarchy relationship between adjustment controls more intuitively, thereby implementing more flexible dynamic adjustment.

Diversity requirements of the user during creation can be satisfied, so that there is a deeper hierarchical structure between controls, and professional creation tools and experience are provided for the user.

If the second object-group control is collapsed to hide its subordinate adjustment controls, the first adjustment control and the second object-group control become siblings at the same level. If the second object-group control is expanded to show its subordinate adjustment controls, the adjusted first adjustment control becomes adjacent to the lowest subordinate adjustment control of the second object-group control, and the first adjustment control becomes as sibling of the second object-group control. Alternatively, the first adjustment control may become adjacent to the second object-group control and is located immediately above the second object-group control. This is not limited herein.

Considering that when the single-object control and the object-group control exist in the adjustment region, the superordinate-subordinate relationship may exist between adjustment controls of different types, when a quantity of the adjustment controls in the adjustment region is relatively large, components of different adjustment controls may be highlighted to help the user understand a level relationship between different controls according to the components, thereby further improving the efficiency of human-computer interaction.

Operation 1550: Move, in the adjustment region, the first adjustment control to the insertion position.

For example, in the adjustment region, the adjusted first adjustment control is located at a level lower than that of the second adjustment control, the first adjustment control corresponds to the first virtual object in the object region, and the second adjustment control corresponds to a second virtual object in the object region. In this case, after the level adjustment in the adjustment region, the first virtual object is located in a layer beneath the layer of the second virtual object in the object region.

In conclusion, the position of the adjustment control is adjusted according to the slide operation. The slide operation corresponds to the vector component separately in the first direction and the second direction, so that the control can be accurately adjusted with reference to at least the two directions. When there are a lot of adjustment controls in the adjustment region, it is unnecessary to collapse or expand the controls frequently in the control list during the adjustment of display priority the virtual objections. Since rearrangement of the adjustment control is implemented with reference to the vector components of the same slide operation in different directions, the rearrangement is convenient and thus human-computer interaction is more efficient.

Herein the target control may be determined by using the first vector component determined by the slide operation, so that an interface can respond to a user requirement in time and flexibly, and the insertion position is determined when the target control is subordinate to the first group adjustment component and there is superordinate-subordinate relationship between two group controls. An existing layout does not need to be significantly adjusted while the hierarchical structure of the controls is accurately understood, and it ensures accurate adjustment of a target position, thereby improving a dynamic adaptation capability and interaction experience of a user interface. Especially in a complex level and control nesting scenario, misplacement and confusion can be effectively avoided.

The user may combine the adjustment controls in the adjustment region, so that the at least two adjustment controls are fused, and for adjustment controls on which a same type of operation needs to be performed for adjustment at the same time, the efficiency of human-computer interaction is improved. After the combination, the aforementioned object-group control may be obtained. The object-group control may include only the single-object control(s). The grouping may be alternatively continued to combine object-group controls and increase a depth of the hierarchical structure. In all embodiments of the present disclosure, a level threshold may be set to constrain a level number of object-group controls to reduce computing resources consumed during a grouping operation and avoid a problem that the user cannot quickly locate the first adjustment control due to excessive grouping.

FIG. 16 is a flowchart of a method for performing level adjustment on an object-group control according to an embodiment of the present disclosure. The method includes the following operations.

Operation 1610: Display an object region and an adjustment region.

The object region comprises at least two virtual objects, the adjustment region comprises a hierarchical structure of at least two adjustment controls, and the at least two adjustment controls when being displayed are arranged along a first direction in the hierarchical structure. The at least two adjustment controls comprise a first adjustment control, and the first adjustment control is configured for adjusting a display parameter of a first virtual object among the at least two virtual objects.

The at least two adjustment controls comprise one or more single-object controls and one or more object-group controls, each object-group control is at least superordinate to another object-group control or a single-object control in the hierarchical structure, and the one or more object-group controls comprise a first object-group control and a second object-group control.

Operation 1620: Detect a slide operation moving the first object-group control to the second object-group control.

The slide operation may be called a group slide operation. It is an operation of sliding in the adjustment region and adjusting a level of the first object-group control after a user selects the first object-group control. The single-object control subordinate to the first object-group control is subject to the level adjustment along with the first object-group control. Before and after the level adjustment, a level relationship between the first object-group control and these single-object controls included therein remains unchanged.

For example, a first object-group control A is not subordinate to any object-group control (level 1), the first object-group control A is superordinate to a single-object control B (level 2) and a single-object control C (level 2), and levels of the single-object control B and the single-object control C are the same and are both lower than the level of the first object-group control A.

A group slide operation is detected to move the first object-group control A to be subordinate to a second object-group control D (level 1), the second object-group control D is superordinate to single-object control E (level 2). After the adjustment, the first object-group control A and the single-object control E becomes siblings and are both lower in level that the second object-group control D (the level of the first object-group control A is changed from 1 to 2), and the levels of the single-object control B and the single-object control C are the same (the levels of the single-object control B and the single-object control C are changed from 2 to 3) and are both lower than the levels of the first object-group control A and the single-object control E. Because the first object-group control A is subordinate to the second object-group control D, there is a superordinate-subordinate relationship, and the levels of the single-object control B and the single-object control C are also lower than the level of the second object-group control D.

Operation 1630: Adjust, in the adjustment region, the first object-group control to be a subordinate of the second object-group control in the hierarchical structure, when the first object-group control and the second object-group control are determined to meet a group insertion condition.

The group insertion condition comprises that a quantity of levels subordinate to the second object-group control in the hierarchical structure is less than or equal to a threshold when the first object-group control is subordinate to the second object-group control.

In all embodiments of the present disclosure, the level threshold may be n, that is, each object-group control is allowed to have at most only n-2 levels of subordinate object-group controls, where n is an integer greater than 2.

For example, the level threshold is 5, the object-group control A is at the highest level of 1, the object-group control A is superordinate to an object-group control B (level 2), the object-group control B is superordinate to an object-group control C (level 3), the object-group control C is superordinate to an object-group control D (level 4), and the object-group control D is superordinate to a single-object control E (level 5). The object-group control D is thus not allowed to have a superordinate object-group control.

As an example, there is an object-group control F (level 1), and the object-group control F is superordinate to only a single-object control (level 2).

In a case that the object-group control F is inserted into any one of the object-group controls A to D, the quantiles of the levels in the hierarchical structure would be changed as follows.
(1) The object-group control, A=1+2=3<5, (2) the object-group control, B=2+2=4<5, (3) the object-group control, C=3+2=5, and (4) the object-group control, D=4+2=6>5.

Therefore, the group insertion condition is met between the object-group control F and each of the object-group control A, the object-group control B, and the object-group control C, such that the object-group control F is allowed to be inserted into the object-group control A, the object-group control B, or the object-group control C. The group insertion condition is not met between the object-group control F and the object-group control D, and the object-group control F is not allowed to be inserted into the object-group control D.

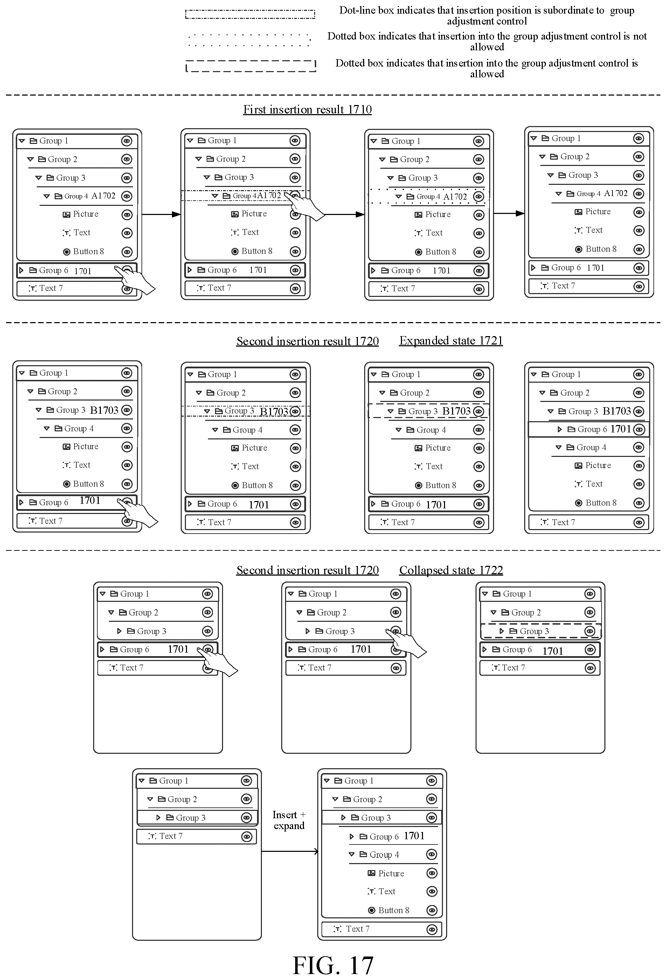

FIG. 17 is a schematic diagram of a result of inserting a first object-group control into a second object-group control. As shown in FIG. 17, it is taken as an example that the level threshold is 5.

First insertion result 1710: A level of a first object-group control 1701 is 1, the first object-group control 1701 is superordinate to only a single-object control (level 2), and a level of a second object-group control A1702 is 4. Thus, the insertion fails, and the first object-group control 1701 and the second object-group control A1702 remain in their original levels.

Second insertion result 1720: The level of the first object-group control 1701 is 1, the first object-group control 1701 is superordinate to only a single-object control (level 2), a level of a second object-group control B1703 is 3. Thus, the insertion succeeds, and the first object-group control 1701 becomes subordinate to the second object-group control B1703.

The second insertion result 1720 includes an expanded state 1721 and a collapsed state 1722. In the expanded state 1721, the second object-group control B1703 is expanded to show its subordinate adjustment controls. After the user releases the first object-group control 1701, a picture showing that the first object-group control 1701 becomes the subordinate of the second object-group control B1703 is directly displayed. The second object-group control B1703 in the collapsed state 1722 is collapsed to hide its subordinate adjustment controls. After the user releases the first object-group control 1701, the first object-group control 1701 is also hidden. Alternatively, the second object-group control B1703 alternatively be triggered to expand at this time. After the second object-group control B1703 is expanded, the first object-group control 1701 is displayed as the subordinate of the second object-group control B1703.

In conclusion, the position of the adjustment control is adjusted according to the slide operation. The slide operation has vector components along the first direction and the second direction, so that the adjustment control can be adjusted accurately with reference to at least two directions. When there are a lot of adjustment controls in the adjustment region, it is unnecessary to collapse or expand the controls frequently in the control list during the adjustment of display priority the virtual objections. Since rearrangement of the adjustment control is implemented with reference to the vector components of the same slide operation in different directions, the rearrangement is convenient and thus human-computer interaction is more efficient.

Hereinabove illustrated is a solution for combining adjustment controls to efficiently adjust control levels. Through the combination, the object-group control having subordinate single-object control(s) is obtained, and grouping may be further performed on object-group controls to increase a depth of levels in the hierarchical structure, and control level adjustment may be efficiently implemented by adjusting the object-group control, thereby improving level adjustment efficiency. More complex relationship adjustment can be handled, thereby moving controls in batches. In addition, the level threshold may be set to constrain the level numbers of the object-group controls, which helps to avoid excessive complexity of levels, interface clutter, or performance degradation, and provides a simple, efficient, and stable manner to adjust the controls and an interface layout, so that users can have a smoother and more intuitive interactive experience during operation.

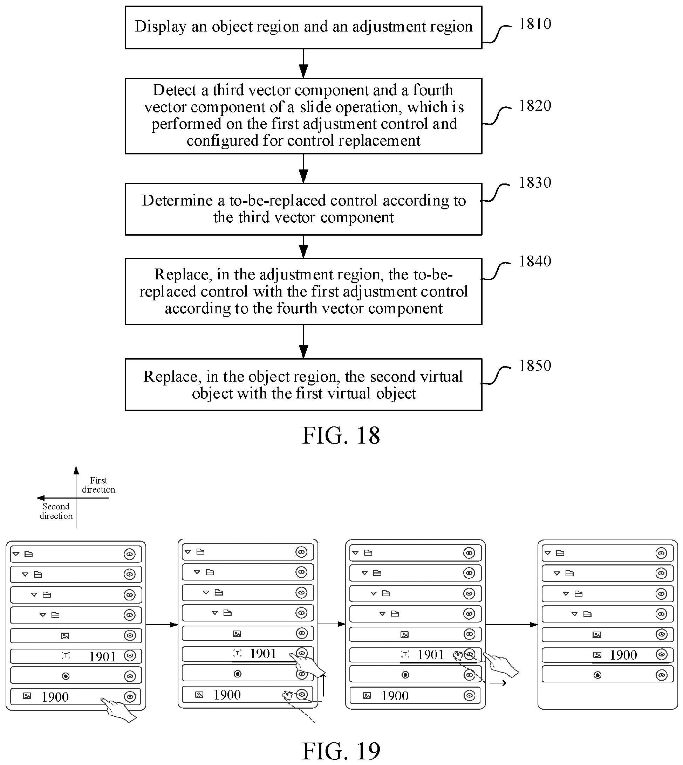

In all embodiments of the present disclosure, some adjustment controls in the adjustment region may be replaced. The user may directly replace the adjustment controls with other adjustment controls by using a slide operation. This manner can improve the efficiency of human-computer interaction when compared with a manner of deleting a to-be-replaced control and then inserting a new control. FIG. 18 is a flowchart of a method for replacing an adjustment control through a sliding operation. The method includes the following operations.

Operation 1810: Display an object region and an adjustment region.

The object region comprises at least two virtual objects, the adjustment region comprises a hierarchical structure of at least two adjustment controls, and the at least two adjustment controls when being displayed are arranged along a first direction in the hierarchical structure. The at least two adjustment controls comprise a first adjustment control, and the first adjustment control is configured for adjusting a display parameter of a first virtual object among the at least two virtual objects.

Operation 1820: Detect a third vector component and a fourth vector component of a slide operation, which is performed on the first adjustment control and configured for control replacement.

After selecting the first adjustment control, a user slides in the adjustment region. The slide operation is also called a slide replacement operation, and it has a third vector component in the first direction and a fourth vector component in the second direction.

In all embodiments of the present disclosure, the first direction may be a vertical direction, the second direction is a horizontal direction, and the first direction and the second direction are perpendicular to each other.

Operation 1830: Determine a to-be-replaced control according to the third vector component, where the to-be-replaced control and the first adjustment control are arranged along the first direction.

The to-be-replaced control is configured for adjusting a second virtual object among the at least two virtual objects. A manner of determining the to-be-replaced control according to the third vector component may refer to the foregoing manner of determine the target control according to the first vector component.

In all embodiments of the present disclosure, each adjustment control in the adjustment region has a respective component . During the sliding operation, a terminal highlights a selected component in real time according to the currently detected third vector component, and it determines a second component which is highlighted when the third vector component ends.

Operation 1840: Replace, in the adjustment region, the to-be-replaced control with the first adjustment control according to the fourth vector component.

The to-be-replaced control is not displayed in the adjustment region after being replaced, and a level of the first adjustment control in the hierarchical structure after the replacing is identical to a level of the to-be-replaced control in the hierarchical structure before the replacing.

In all embodiments of the present disclosure, the to-be-replaced control may be replaced with the first adjustment control when the fourth vector component is not zero.

For example, a level of the first adjustment control before replacement is level 1, a level of the to-be-replaced control before replacement is level 2, and a level of the first adjustment control after the replacement is also level 2.

Operation 1850: Replace, in the object region, the second virtual object with the first virtual object.

After the replacement, the second virtual object corresponding to the to-be-replaced control is not displayed in the object region, and the first virtual object is now displayed at a position of the second virtual object before the replacement.

Reference is made to FIG. 19, which is a schematic diagram of a process of replacing a control through a sliding operation.

The first adjustment control 1900 is selected and then slid, the component of the to-be-replaced control 1901 is highlighted (e.g., displayed) according to the third vector component in the first direction, and the replacement is finally implemented according to the fourth vector component in the second direction. After the first adjustment control 1900 is released, the to-be-replaced control 1901 is replaced with the first adjustment control 1900.

In conclusion, the adjustment control can be replaced by using only one slide operation. Compared with a manner in which a to-be-replaced control is first deleted and a first adjustment control is then inserted at an original position of the to-be-replaced control, the method can improve control adjustment efficiency of the user and efficiency of human-computer interaction.

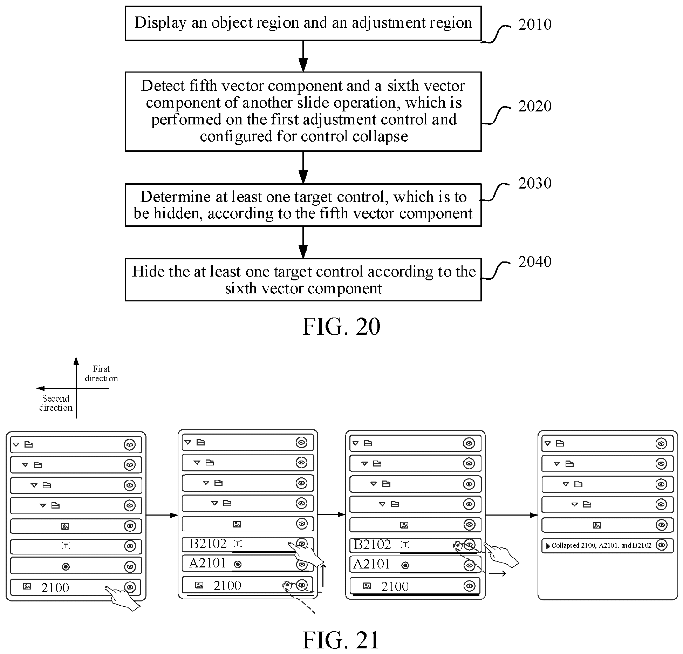

FIG. 20 is a flowchart of a method for collapsing an adjustment control through a sliding operation according to an embodiment of the present disclosure. The method includes the following operations.

Operation 2010: Display an object region and an adjustment region.

The object region comprises at least two virtual objects, the adjustment region comprises a hierarchical structure of at least two adjustment controls, and the at least two adjustment controls when being displayed are arranged along a first direction in the hierarchical structure. The at least two adjustment controls comprise a first adjustment control, and the first adjustment control is configured for adjusting a display parameter of a first virtual object among the at least two virtual objects.

Operation 2020: Detect fifth vector component and a sixth vector component of another slide operation, which is performed on the first adjustment control and configured for control collapse.

A user slides in the adjustment region, and an adjustment control to be collapsed is determined according to a starting point and an end point of the slide operation, which is also called a slide collapse operation. Then, this adjustment control is collapsed when the slide collapse operation continues.

Adjustment controls that need to be collapsed are freely selected through a sliding operation. Compared with a conventional manner, a manner of collapsing all adjustment controls in a single object-group control in groups can implement decoupling between the object-group control and the single-object control and reserve an adjustment control that the user needs to present, thereby improving efficiency of adjusting an adjustment control by the user and efficiency of human-computer interaction.

The slide collapse operation has a fifth vector component in the first direction and a sixth vector component in the second direction.

Operation 2030: Determine at least one target control, which is to be hidden, according to the fifth vector component, where the at least one target control and the first adjustment control are arranged along the first direction.

In all embodiments of the present disclosure, a start point of the slide collapse operation may be an arbitrary adjustment control. The adjustment control at the start point may be determined according to a position of a contact between the user and the terminal or may be determined in a user-customized manner.

For example, when the user performs the slide collapse operation, the position of the contact point between the user and the terminal is position A, and an adjustment control closest to the position A serves as a start-point adjustment control. A manner of determining the target control according to the fifth vector component may refer to the foregoing manner of determine the target control according to the first vector component.

As another example, before performing the slide collapse operation, the user selects one of the adjustment controls in the adjustment region as the start-point adjustment control.

At least one candidate collapse control is determined according to the fifth vector component and the start-point adjustment control.

In all embodiments of the present disclosure, each adjustment control in the adjustment region may have a respective component. During the sliding operation, the terminal highlights component the component(s) respectively corresponding to the adjustment control(s), one at a time, according to the currently detected fifth vector component. It determines an adjustment control of which the component is highlighted as when the fifth vector component terminates (i.e., when the slide collapse operation no longer moves along the first direction) as the target control.

It is taken as an example that the first direction is a vertical direction. Adjustment controls 1 to 15 are separately arranged from top to bottom in the first direction. The adjustment control 4 is the start-point adjustment control. The fifth vector component is a vector component pointing downward. The fifth vector component has a magnitude equal to a total width of five adjustment controls. Therefore, the candidate adjustment controls are the adjustment control 4, the adjustment control 5, the adjustment control 6, the adjustment control 7, the adjustment control 8, and the adjustment control 9, that is, the candidate adjustment controls include the start-point adjustment control and five adjustment controls adjacent to the start-point adjustment control.

Operation 2040: Hide the at least one target control according to the sixth vector component.

A collapse identifier is displayed in the adjustment region for the at least one target control that is collapsed.

In all embodiments of the present disclosure, the at least one target control may be hidden when the sixth vector component is not zero.

Hiding control through a sliding operation can freely collapse an adjustment control to be collapsed according to a user requirement, thereby providing more solutions as choices when the user collapses or expands a control, and can reserve an adjustment control that the user needs to display, thereby improving efficiency of adjusting the adjustment control by the user and the efficiency of human-computer interaction.

Reference is made to FIG. 21, which is a schematic diagram of a process of collapsing an adjustment control through a sliding operation.

After the start-point adjustment control 2100 is selected, the components of a start-point adjustment control 2100, a candidate control A2101, and a candidate control B2102 are highlighted according to the fifth vector component in the first direction. All candidate controls are hidden according to the sixth vector component in the second direction. After the start-point adjustment control 2100 is released, the start-point adjustment control 2100, the candidate control A2101, and the candidate collapse control B2102 are hidden.

The foregoing process describes content of hiding a control by using a slide collapse operation to hide the control. This process helps to improve interface neatness. With reference to the fifth vector component and the sixth vector component, it helps to control a control that needs to be collapsed more flexibly, so that a multi-dimensional slide interaction manner improves intuitiveness and precision of operations. In addition, a displayed collapse identifier enables the user to intuitively view a control collapse status, thereby managing interface elements more conveniently, enhancing feedback and controllability of interaction, reducing complexity of a user operation, and also increasing control management flexibility.

In conclusion, the position of the adjustment control is adjusted according to the slide operation. The slide operation has vector components along the first direction and the second direction, so that the adjustment control can be adjusted accurately with reference to at least two directions. When there are a lot of adjustment controls in the adjustment region, it is unnecessary to collapse or expand the controls frequently in the control list during the adjustment of display priority the virtual objections. Since rearrangement of the adjustment control is implemented with reference to the vector components of the same slide operation in different directions, the rearrangement is convenient and thus human-computer interaction is more efficient.

This embodiment of the present disclosure describes content of the slide replacement operation of the adjustment control. The to-be-replaced control is determined by using the slide replacement operation, thereby replacing the to-be-replaced control with the first adjustment control, which provides an intuitive and easy-to-understand interaction manner. The user may select and replace a control by intuitively sliding, to ensure that a replaced control maintains consistency with an original control at an interface level, which helps avoid overlapping or misplacement of interface elements, improves stability and aesthetics of the user interface, and enhances responsiveness and intuitiveness of the interface.

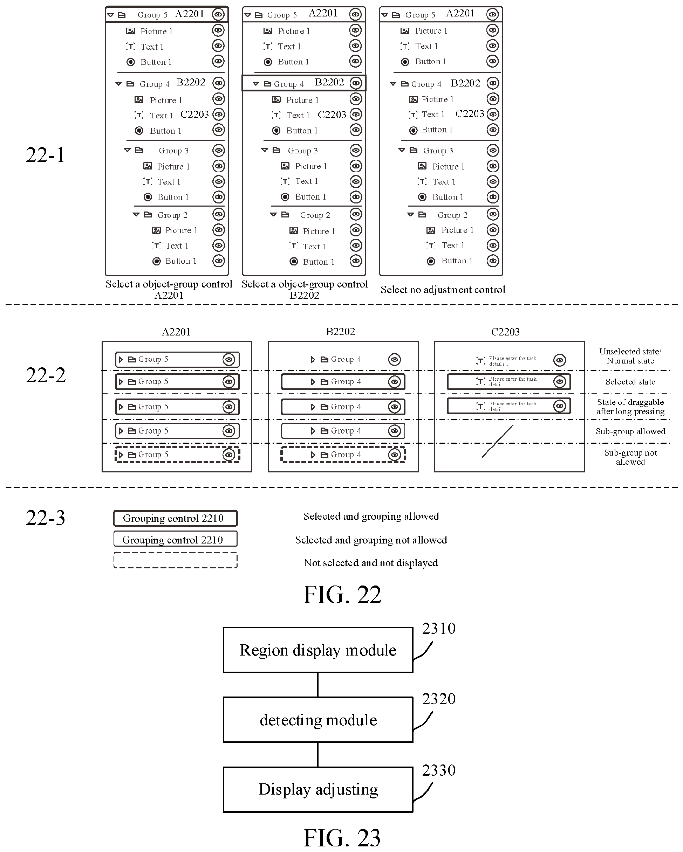

In all embodiments of the present disclosure, when the user performs a corresponding operation on an adjustment control in the adjustment region, the selected adjustment control may be displayed with a highlight effect (e.g., with the highlighted component) and is thus distinguished from a non-selected adjustment control. Reference is made to FIG. 22 which is a schematic diagram of display effects of an adjustment control in different states.

The adjustment region includes at least two adjustment controls, for example, a topmost object-group control A2201, and an object-group control B2202 is subordinate to the object-group control A2201.

As shown in subfigure 22-1, when the object-group control A2201 is selected, the object-group control A2201 is displayed with the highlight effect, and when the object-group control B2202 is selected, the object-group control B2202 is displayed in with the highlight effect.

Subfigure 22-2 shows display effects of different states of adjustment controls. The states includes: (1) a display state in which an adjustment control is not selected; (2) a display state in which an adjustment control is selected; (3) a display state in which an adjustment control has not been selected by long-pressing yet but can be dragged after the long-pressing; (4) a display state of an object-group control, in which other adjustment control(s) are allowed to be adjusted as its subordinate; and (5) a display state of an object-group control, in which other adjustment control(s) are not allowed to be adjusted as its subordinate.

Types of the adjustment control include the following types: (1) the object-group control A2201: a topmost group in the adjustment region; (2) the object-group control B2202 that is subordinate to the object-group control A2201; and (3) a single-object control C2203 that is subordinate to the object-group control B2202.

In all embodiments of the present disclosure, creating a new object-group control within the existing object-group control or grouping selected adjustment control(s) may be implemented by using a grouping control 2210.

As shown in subfigure 22-3, if no adjustment control is selected, the grouping control 2210 is not displayed.

If an adjustment control is selected from the adjustment region and it is a qualified target of a grouping operation (for example, forming a group with other adjustment controls, generating another object-group control as its subordinate, or the like), the grouping control 2210 is highlighted.

In all embodiments of the present disclosure, there may be a threshold limiting a quantity of levels in the hierarchical structure. If an adjustment control is selected in the adjustment region and it is not a qualified target of the grouping operation (for example, it is in the lowest level and the level quantity of the adjustment controls has reached the threshold), the grouping control 2210 is displayed with an effect prompting the grouping operation is not allowed.

FIG. 23 is a structural block diagram of an apparatus for adjusting a position of a control of a virtual object according to an embodiment of the present disclosure. As shown in FIG. 23, the apparatus includes a region display module 2310, a detecting module 2320, and a display adjusting module 2330.

The region display module 2310 is configured for displaying an object region and an adjustment region, where the object region comprises at least two virtual objects, the adjustment region comprises a hierarchical structure of at least two adjustment controls, the at least two adjustment controls when being displayed are arranged along a first direction in the hierarchical structure, the at least two adjustment controls comprise a first adjustment control, and the first adjustment control is configured for adjusting a display parameter of a first virtual object among the at least two virtual objects.

The detecting module 2320 is configured for detecting a first vector component and a second vector component of a slide operation performed on the first adjustment control, where the first vector component is along the first direction, the second vector component along a second direction, and the first direction is different from the second direction.

The display adjusting module 2330 is configured for: adjusting, in the adjustment region, a position of the first adjustment control in the hierarchical structure according to the first vector component and the second vector component; and adjusting the first virtual object in the object region according to the adjusted position of the first adjustment control in the hierarchical structure displayed in the adjustment region.

In all embodiments of the present disclosure, the display adjusting module 2330 may be further configured for: determining a first target position in the first direction according to the first vector component, where the first target position is mapped to at least one candidate control; determining a second adjustment control from the at least one candidate control according to the second vector component; and adjusting, in the adjustment region, the first adjustment control to be in a same level as the second adjustment control in the hierarchical structure.

In all embodiments of the present disclosure, each of the at least two adjustment controls may have a respective component for visualizing selection on such adjustment control.

The display adjusting module 2330 is further configured for: highlighting, in the adjustment region, the at least one component of the at least one candidate control, one component at a time, when the slide operation is being performed, where the second vector component is detected in real time, and the highlighted component is determined according to the currently detected second vector component; and determining, in response to the slide operation terminating, a candidate control among the at least one candidate control to serve as the second adjustment control, where the component of the candidate control is highlighted when the slide operation terminates.

In all embodiments of the present disclosure, the component may comprise an underline.

The display adjusting module 2330 is further configured for displaying the underline of a currently selected candidate control while not displaying the underline of each candidate control other than the currently selected candidate control, where the currently selected candidate control is determined from the at least one candidate control according to the currently detected second vector component.

In all embodiments of the present disclosure, each of the at least two adjustment controls may have a respective component.

The display adjusting module 2330 is further configured for: determining a first level from all levels in the hierarchical structure according to the second vector component, where one or more adjustment controls are in the first level among the at least two adjustment control; determining, according to the first vector component, a third adjustment control from the one or more adjustment controls in the first level; and adjusting, in the adjustment region, the first adjustment control to be a sibling of the third adjustment control in the first level of the hierarchical structure.

In all embodiments of the present disclosure, the at least two adjustment controls may comprise one or more single-object controls and one or more object-group controls, each object-group control is at least superordinate to another object-group control or a single-object control in the hierarchical structure, and each of the one or more single-object controls and the one or more object-group controls has a respective component.

The display adjusting module 2330 is further configured for: determining a target control from the at least two adjustment controls according to the first vector component, where the target control and the first adjustment control are arranged along the first direction; when the target control is subordinate to a first object-group control and the first object-group control is subordinate to a second object-group control, determining an insertion position according to the first object-group control, the second object-group control, and the second vector component; and moving, in the adjustment region, the first adjustment control to the insertion position.

In all embodiments of the present disclosure, the display adjusting module 2330 may be further configured for: highlighting, in the adjustment region, the components of the target control, the first object-group control, and the second object-group control, one component at a time, where the second vector component is detected in real time, and the highlighted component is determined according to the currently detected second vector component; and determining, in response to the slide operation terminating when the component of the target control is highlighted, a position representing subordination to the first object-group control to serve as the insertion position, where the first adjustment control at the insertion position and the target control are siblings in the hierarchical structure.

In all embodiments of the present disclosure, the display adjusting module 2330 may be further configured for determining, in response to the slide operation terminating when the component of the first object-group control is highlighted, a position representing subordination to the second object-group control to serve as the insertion position, where the adjusted first adjustment control at the insertion position and the first object-group control are siblings in the hierarchical structure.

In all embodiments of the present disclosure, the display adjusting module 2330 may be further configured for: determining, in response to the slide operation terminating when the component of the second object-group control is highlighted, a position adjacent to the second object-group control to serve as the insertion position, where the adjusted first adjustment control at the insertion position and the second object-group control are siblings in the hierarchical structure.

In all embodiments of the present disclosure, the at least two adjustment controls may comprise one or more single-object controls and one or more object-group controls, each object-group control is at least superordinate to another object-group control or a single-object control in the hierarchical structure, and the one or more object-group controls comprise a first object-group control and a second object-group control.

The detecting module 2320 is further configured for: detecting a slide operation moving the first object-group control to the second object-group control; and adjusting, in the adjustment region, the first object-group control to be a subordinate of the second object-group control in the hierarchical structure, when the first object-group control and the second object-group control are determined to meet a group insertion condition; where the group insertion condition comprises that a quantity of levels subordinate to the second object-group control in the hierarchical structure is less than or equal to a threshold when the first object-group control is subordinate to the second object-group control.

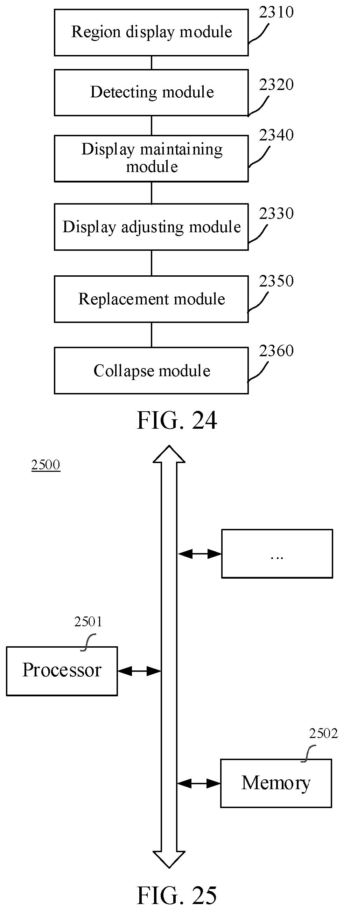

In all embodiments of the present disclosure, as shown in FIG. 24, subsequent to the detecting module 2320, the apparatus may further include a display maintaining module 2340.

The display maintaining module 2340 is configured for: canceling adjustment on the position of the first adjustment control in the adjustment region and displaying visual information indicating that the adjustment is cancelled, when a sliding distance of the slide operation meets a cancellation condition; and maintaining the first adjustment control at an original position in the adjustment region and maintaining the first virtual object at an original position in the object region.

In all embodiments of the present disclosure, the apparatus may further include a replacement module 2350.

The replacement module 2350 is configured for: detecting a third vector component and a fourth vector component of another slide operation, which is performed on the first adjustment control and configured for control replacement, where the third vector component is along the first direction and the fourth vector component is along the second direction; determining a to-be-replaced control according to the third vector component, where the to-be-replaced control is configured for adjusting a second virtual object among the at least two virtual objects, where the to-be-replaced control and the first adjustment control are arranged along the first direction; replacing, in the adjustment region, the to-be-replaced control with the first adjustment control according to the fourth vector component, where the to-be-replaced control is not displayed in the adjustment region after being replaced, and a level of the first adjustment control in the hierarchical structure after the replacing is identical to a level of the to-be-replaced control in the hierarchical structure before the replacing; and replacing, in the object region, the second virtual object with the first virtual object.

In all embodiments of the present disclosure, the apparatus may further include a collapse module 2360.

The collapse module 2360 is configured for detecting a fifth vector component and a sixth vector component of another slide operation, which is performed on the first adjustment control and configured for control collapse, where the fifth vector component is along the first direction and the sixth vector component is along the second direction; determining at least one target control, which is to be hidden, according to the fifth vector component, where the at least one target control and the first adjustment control are arranged along the first direction; and hiding the at least one target control according to the sixth vector component, where a collapse identifier is displayed in the adjustment region for the at least one target control that is collapsed.

In conclusion, according to the apparatus provided in the present disclosure, the position of the adjustment control is adjusted according to the slide operation. The slide operation corresponds to the vector component separately in the first direction and the second direction, so that the control can be accurately adjusted in at least two directions. When a quantity of adjustment controls in the adjustment region is relatively large, it is unnecessary to frequently collapse or expand a control list and then adjust controls. Adjustment is implemented according to vector components of a same slide operation in different directions, so that an adjustment process is more convenient, and efficiency of human-computer interaction is improved.

The control adjustment apparatus provided in the foregoing embodiments is illustrated with an example of division of the foregoing functional modules. In actual application, the functions may be allocated to and completed by different functional modules according to requirements, that is, an internal structure of a device is divided into different functional modules, to implement all or some of the functions described above. In addition, the control adjustment apparatus provided in the foregoing embodiment and the method embodiment belong to the same concept, and specific implementation process thereof can be found in the method embodiments. Details are not described herein again.

FIG. 25 is a structural block diagram of a computer device 2500 according to an embodiment of the present disclosure. The computer device 2500 may be: a smartphone, a tablet computer, a moving picture experts group audio layer III (MP3) player, a moving picture experts group audio layer IV (MP4) player, a laptop computer, or a desktop computer. The computer device 2500 may alternatively be referred to as another name such as user equipment, a portable terminal, a laptop terminal, or a desktop terminal.

Generally, the computer device 2500 includes: a processor 2501 and a memory 2502.

The processor 2501 may include one or more processing cores, such as a 4-core processor and an 8-core processor. The processor 2501 may be implemented by using at least one hardware form of a digital signal processor (DSP), a field-programmable gate array (FPGA), and a programmable logic array (PLA). The processor 2501 may alternatively include a main processor and a coprocessor. The main processor is configured to process data in an activated state and is also referred to as a central processing unit (CPU). The coprocessor is a low power consumption processor configured to process data in a standby state. In all embodiments of the present disclosure, the processor 2501 may have a graphics processing unit (GPU) integrated therein. The GPU is configured to render and draw content that needs to be displayed on a display screen. In all embodiments of the present disclosure, the processor 2501 may further include an AI processor. The AI processor is configured to process computing operations related to machine learning.

The memory 2502 may include one or more computer-readable storage media. The one or more computer-readable storage media may be non-transient. The memory 2502 may further include a high-speed random-access memory and a non-volatile memory, for example, one or at least two disk storage devices and flash storage devices. In all embodiments of the present disclosure, a non-transitory computer-readable storage medium in the memory 2502 is configured to store at least one instruction. The at least one instruction is configured for being executed by the processor 2501, to implement the method for adjusting a position of a control of a virtual object provided in the method embodiments of the present disclosure.

In all embodiments of the present disclosure, the computer device 2500 further includes other components. A person skilled in the art may understand that the structure shown in FIG. 25 constitutes no limitation on the computer device 2500 and may include more or fewer components than those shown in the figure, or some components may be combined, or a different component arrangement may be used.

In all embodiments of the present disclosure, the computer-readable storage medium may include: a read-only memory (ROM), a random-access memory (RAM), a solid-state drive (SSD), an optical disc, or the like. The random-access memory may include a resistance random access memory (ReRAM) and a dynamic random-access memory (DRAM). The serial numbers of the foregoing embodiments of the present disclosure are merely for description, and do not represent the preference of the embodiments.

An embodiment of the present disclosure further provides a computer device. The computer device includes a processor and a memory, the memory having at least one instruction, at least one program, a code set, or an instruction set stored therein, the at least one instruction, the at least one program, the code set, or the instruction set being loaded and executed by the processor to implement the method for adjusting a position of a control of a virtual object according to any one of the foregoing embodiments of the present disclosure.

An embodiment of the present disclosure further provides a computer-readable storage medium, having at least one instruction, at least one program, a code set, or an instruction set stored therein, the at least one instruction, the at least one program, the code set, or the instruction set being loaded and executed by a processor to implement the method for adjusting a position of a control of a virtual object according to any one of the foregoing embodiments of the present disclosure.

An embodiment of the present disclosure further provides a computer program product or a computer program, the computer program product or the computer program including computer instructions, and the computer instructions being stored in a computer-readable storage medium. A processor of a computer device reads the computer instructions from the computer-readable storage medium, and the processor executes the computer instructions, so that the computer device performs the method for adjusting a position of a control of a virtual object according to any one of the foregoing embodiments.

A person of ordinary skill in the art may understand that all or some of the operations of the foregoing embodiment may be implemented by hardware or may be implemented by a program instructing relevant hardware. The program may be stored in a computer-readable storage medium. The storage medium may be a read-only memory, a magnetic disk, an optical disc, or the like.

## Claims

1. A method for adjusting a position of a control of a virtual object, executable by a computer device, wherein the method comprises:
displaying an object region and an adjustment region, wherein the object region comprises at least two virtual objects, the adjustment region comprises a hierarchical structure of at least two adjustment controls, the at least two adjustment controls when being displayed are arranged along a first direction in the hierarchical structure, the at least two adjustment controls comprise a first adjustment control, and the first adjustment control is configured for adjusting a display parameter of a first virtual object among the at least two virtual objects;
detecting a first vector component and a second vector component of a slide operation performed on the first adjustment control, wherein the first vector component is along the first direction, the second vector component along a second direction, and the first direction is different from the second direction;
adjusting, in the adjustment region, a position of the first adjustment control in the hierarchical structure according to the first vector component and the second vector component; and
adjusting the first virtual object in the object region according to the adjusted position of the first adjustment control in the hierarchical structure displayed in the adjustment region.

2. The method according to claim 1, wherein adjusting, in the adjustment region, the position of the first adjustment control in the hierarchical structure according to the first vector component and the second vector component comprises:
determining a first target position in the first direction according to the first vector component, wherein the first target position is mapped to at least one candidate control;
determining a second adjustment control from the at least one candidate control according to the second vector component; and
adjusting, in the adjustment region, the first adjustment control to be in a same level as the second adjustment control in the hierarchical structure.

3. The method according to claim 1 or 2, wherein:
each of the at least two adjustment controls has a respective component for visualizing selection on such adjustment control; and
determining the second adjustment control from the at least one candidate control according to the second vector component comprises:
highlighting, in the adjustment region, the at least one component of the at least one candidate control, one component at a time, when the slide operation is being performed, wherein the second vector component is detected in real time, and the highlighted component is determined according to the currently detected second vector component; and
determining, in response to the slide operation terminating, a candidate control among the at least one candidate control to serve as the second adjustment control, wherein the component of the candidate control is highlighted when the slide operation terminates.

4. The method according to any one of claims 1 to 3, wherein:
the component comprises an underline; and
highlighting, in the adjustment region, the at least one component of the at least one candidate control, one component at a time when the slide operation is being performed comprises:
displaying the underline of a currently selected candidate control while not displaying the underline of each candidate control other than the currently selected candidate control, wherein the currently selected candidate control is determined from the at least one candidate control according to the currently detected second vector component.

5. The method according to any one of claims 1 to 4, wherein:
each of the at least two adjustment controls has a respective component; and
adjusting, in the adjustment region, a position of the first adjustment control in the hierarchical structure according to the first vector component and the second vector component comprises:
determining a first level from all levels in the hierarchical structure according to the second vector component, wherein one or more adjustment controls are in the first level among the at least two adjustment control;
determining, according to the first vector component, a third adjustment control from the one or more adjustment controls in the first level; and
adjusting, in the adjustment region, the first adjustment control to be a sibling of the third adjustment control in the first level of the hierarchical structure.

6. The method according to any one of claims 1 to 5, wherein:
the at least two adjustment controls comprise one or more single-object controls and one or more object-group controls, each object-group control is at least superordinate to another object-group control or a single-object control in the hierarchical structure, and each of the one or more single-object controls and the one or more object-group controls has a respective component; and
adjusting, in the adjustment region, a position of the first adjustment control in the hierarchical structure according to the first vector component and the second vector component comprises:
determining a target control from the at least two adjustment controls according to the first vector component, wherein the target control and the first adjustment control are arranged along the first direction;
when the target control is subordinate to a first object-group control and the first object-group control is subordinate to a second object-group control,
determining an insertion position according to the first object-group control, the second object-group control, and the second vector component; and
moving, in the adjustment region, the first adjustment control to the insertion position.

7. The method according to any one of claims 1 to 6, wherein determining the insertion position according to the first object-group control, the second object-group control, and the second vector component comprises:
highlighting, in the adjustment region, the components of the target control, the first object-group control, and the second object-group control, one component at a time, wherein the second vector component is detected in real time, and the highlighted component is determined according to the currently detected second vector component; and
determining, in response to the slide operation terminating when the component of the target control is highlighted, a position representing subordination to the first object-group control to serve as the insertion position, wherein the first adjustment control at the insertion position and the target control are siblings in the hierarchical structure.

8. The method according to any one of claims 1 to 7, further comprising:
determining, in response to the slide operation terminating when the component of the first object-group control is highlighted, a position representing subordination to the second object-group control to serve as the insertion position, wherein the adjusted first adjustment control at the insertion position and the first object-group control are siblings in the hierarchical structure.

9. The method according to any one of claims 1 to 7, further comprising:
determining, in response to the slide operation terminating when the component of the second object-group control is highlighted, a position adjacent to the second object-group control to serve as the insertion position, wherein the adjusted first adjustment control at the insertion position and the second object-group control are siblings in the hierarchical structure.

10. The method according to any one of claims 1 to 9, wherein the at least two adjustment controls comprise one or more single-object controls and one or more object-group controls, each object-group control is at least superordinate to another object-group control or a single-object control in the hierarchical structure, and the one or more object-group controls comprise a first object-group control and a second object-group control; and
the method further comprises:
detecting a slide operation moving the first object-group control to the second object-group control; and
adjusting, in the adjustment region, the first object-group control to be a subordinate of the second object-group control in the hierarchical structure, when the first object-group control and the second object-group control are determined to meet a group insertion condition;
wherein the group insertion condition comprises that a quantity of levels subordinate to the second object-group control in the hierarchical structure is less than or equal to a threshold when the first object-group control is subordinate to the second object-group control.

11. The method according to any one of claims 1 to 10, wherein after detecting the first vector component and the second vector component of the slide operation performed on the first adjustment control, the method further comprises:
canceling adjustment on the position of the first adjustment control in the adjustment region, and displaying visual information indicating that the adjustment is cancelled, when a sliding distance of the slide operation meets a cancellation condition; and
maintaining the first adjustment control at an original position in the adjustment region and maintaining the first virtual object at an original position in the object region.

12. The method according to any one of claims 1 to 11, further comprising:
detecting a third vector component and a fourth vector component of another slide operation, which is performed on the first adjustment control and configured for control replacement, wherein the third vector component is along the first direction and the fourth vector component is along the second direction;
determining a to-be-replaced control according to the third vector component, wherein the to-be-replaced control is configured for adjusting a second virtual object among the at least two virtual objects, wherein the to-be-replaced control and the first adjustment control are arranged along the first direction;
replacing, in the adjustment region, the to-be-replaced control with the first adjustment control according to the fourth vector component, wherein the to-be-replaced control is not displayed in the adjustment region after being replaced, and a level of the first adjustment control in the hierarchical structure after the replacing is identical to a level of the to-be-replaced control in the hierarchical structure before the replacing; and
replacing, in the object region, the second virtual object with the first virtual object.

13. The method according to any one of claims 1 to 12, further comprising:
detecting a fifth vector component and a sixth vector component of another slide operation, which is performed on the first adjustment control and configured for control collapse, wherein the fifth vector component is along the first direction and the sixth vector component is along the second direction;
determining at least one target control, which is to be hidden, according to the fifth vector component, wherein the at least one target control and the first adjustment control are arranged along the first direction; and
hiding the at least one target control according to the sixth vector component, wherein a collapse identifier is displayed in the adjustment region for the at least one target control that is collapsed.

14. An apparatus for adjusting a position of a control of a virtual object, comprising:
a region displaying module, configured for displaying an object region and an adjustment region, wherein the object region comprises at least two virtual objects, the adjustment region comprises a hierarchical structure of at least two adjustment controls, the at least two adjustment controls when being displayed are arranged along a first direction in the hierarchical structure, the at least two adjustment controls comprise a first adjustment control, and the first adjustment control is configured for adjusting a display parameter of a first virtual object among the at least two virtual objects;
a detecting module, configured for detecting a first vector component and a second vector component of a slide operation performed on the first adjustment control, wherein the first vector component is along the first direction, the second vector component along a second direction, and the first direction is different from the second direction; and
a display adjusting module, configured for:
adjusting, in the adjustment region, a position of the first adjustment control in the hierarchical structure according to the first vector component and the second vector component; and
adjusting the first virtual object in the object region according to the adjusted position of the first adjustment control in the hierarchical structure displayed in the adjustment region.

15. The apparatus according to claim 14, wherein the display adjusting module is further configured for:
determining a first target position in the first direction according to the first vector component, wherein the first target position is mapped to at least one candidate control;
determining a second adjustment control from the at least one candidate control according to the second vector component; and
adjusting, in the adjustment region, the first adjustment control to be in a same level as the second adjustment control in the hierarchical structure.

16. The apparatus according to claim 14 or 15, wherein each of the at least two adjustment controls has a respective component for visualizing selection on such adjustment control, and the display adjusting module is further configured for:
highlighting, in the adjustment region, the at least one component of the at least one candidate control, one component at a time, when the slide operation is being performed, wherein the second vector component is detected in real time, and the highlighted component is determined according to the currently detected second vector component; and
determining, in response to the slide operation terminating, a candidate control among the at least one candidate control to serve as the second adjustment control, wherein the component of the candidate control is highlighted when the slide operation terminates.

17. The apparatus according to any one of claims 14 to 16, wherein the component comprises an underline, and the display adjusting module is further configured for:
displaying the underline of a currently selected candidate control while not displaying the underline of each candidate control other than the currently selected candidate control, wherein the currently selected candidate control is determined from the at least one candidate control according to the currently detected second vector component.

18. A computer device, comprising a processor and a memory, wherein:
the memory stores at least one program, and the at least one program when being loaded and executed by the processor implements the method according to any one of claims 1 to 13.

19. A computer-readable storage medium, storing at least one program, wherein the at least one program when being loaded and executed by a processor implements the method according to any one of claims 1 to 13.

20. A computer program product, comprising a computer program, wherein the computer program when executed by a processor implements the method according to any one of claims 1 to 13.
